# EUROPEAN PATENT APPLICATION

(11) **EP 1 601 201 A1**
(43) Date of publication of application: **30.11.2005**
(21) Application number: 05010300.1
(22) Date of filing: 12.05.2005
(51) Int. Cl.: H04N 7/24, H04N 5/445

(54) **Broadcast program providing system, broadcast reception terminal, browsing terminal, operation terminal, computer program and computer program product**

(30) Priority: 25.05.2004 JP 2004155368
(71) Applicant: SONY CORPORATION, Tokyo (JP)
(72) Inventor: Fukuda, Kazuhiro, Shinagawa-ku Tokyo (JP); Maruyama, Tetsuo, Shinagawa-ku Tokyo (JP); Ito, Akihiko, Shinagawa-ku Tokyo (JP)
(74) Representative: Körber, Martin Hans

(57) **Abstract**

A broadcast program providing system (100) is provided having a broadcast program providing apparatus (310) configured to provide a broadcast program; an Electric Content Guide (ECG) information providing apparatus (350) configured to provide an ECG information on the broadcast program; a broadcast reception terminal (210) configured to receive the broadcast program and the ECG information, wherein the broadcast reception terminal includes a storage information acquisition apparatus (214) configured to acquire storage information for guiding a user to ECG information, from the ECG information in response to a certain storage event; a storage information storage location in which the storage information is stored; and a browsing terminal (250) adapted to acquire and make it possible to browse the ECG information based on the storage information stored in the storage information storage location, in response to a certain browsing event.

## Description

### CROSS REFERENCE TO RELATED APPLICATONS

The present invention contains subject matter related to Japanese Patent Applications JP2004-155368, filed to the Japanese Patent Office respectively on May 25, 2004, the entire contents of which being incorporated herein by reference.

### Background of the Invention

### 1. Field of the Invention

The present invention relates to a broadcast program providing system, a broadcast reception terminal, a browsing terminal, and a computer program product, and more particularly to a broadcast program providing system, a broadcast reception terminal, a browsing terminal, a computer program and a computer program product that may increase the convenience of Electric Content Guide services.

### 2. Description of Related Art

Recently, several services have been proposed directed to broadcast programs that are broadcast by broadcast stations. Examples of such services are electric program guide (EPG (Electric Program Guide), hereinafter simply called EPG) services that are used for searching for broadcast programs and electric content guide (ECG (Electric Content Guide), hereinafter simply called ECG) services that also provide information on electronic content related to broadcast programs.

The following Patent Documents are related to the EPG service. Patent Document 1 discloses a technology for describing and accumulating various types of additional information on a delivered broadcast program. Patent Document 2 discloses a technology for seamlessly linking information on a broadcast program to contents on a communication network. In addition, Parent Document 3 discloses a technology for a remote control operation for increasing the operability of the EPG service.
[Patent Document 1] Japanese Laid-Open Patent Application JPH10-13811
[Patent Document 2] International Application Publication 02/011448
[Patent Document 3] Japanese Laid-Open Patent Application JP2003-348370
These patent documents are shown simply as some examples of art related to the present invention. It should be noted that referring to one of or a combination of those documents does not deny the novelty or inventive step of the present invention.

The ECG service is a service that increases the versatility of the EPG service. The ECG service provides the user not only with broadcast program information on a broadcast program but also ECG information created as metadata that is added to the broadcast program. This ECG information is provided for guiding the user to various contents related to the broadcast program and delivered and accumulated on a communication network such as the Internet.

### SUMMARY OF THE INVENTION

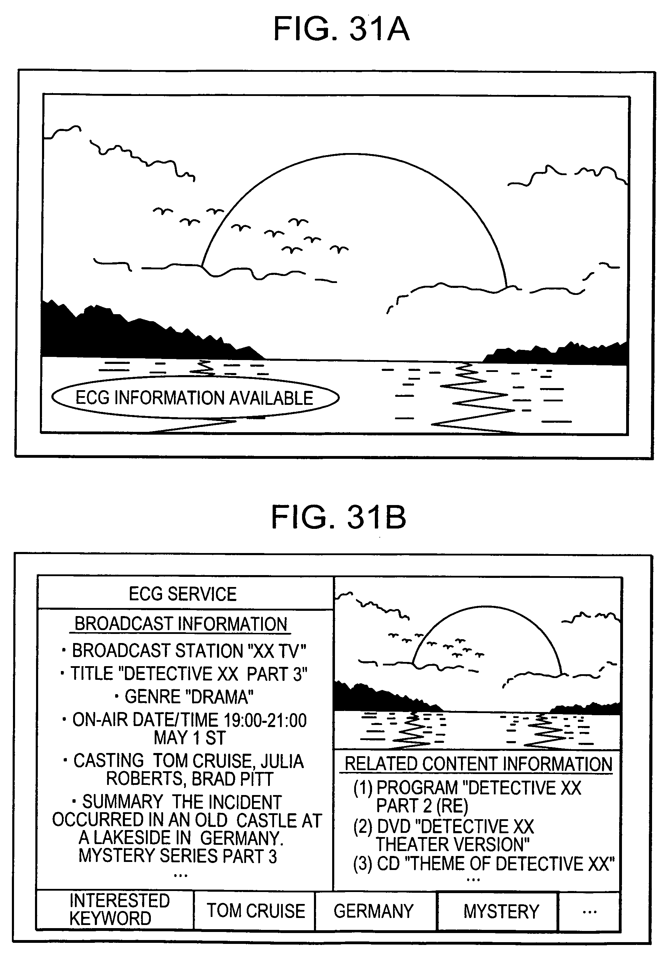

In a conventional ECG service, a user can browse the ECG information while a broadcast program is being broadcast. This means that the user who wants to browse ECG information must temporarily suspend watching the broadcast program, or reduce the screen, for displaying and browsing the ECG information (for example, see FIG. 31B). Therefore, the user finds it difficult to watch a broadcast program and browse ECG information at the same time, and does not feel the service very convenient to use. Another issue is that, if added to a CM that is broadcast for a relatively short time, ECG information does not produce an effective advertisement effect.

In addition, browsing ECG information remotely from the watching environment of a broadcast program is very tedious. For example, suppose that the user wants to confirm an ECG-information-related content after watching a broadcast program. In that case, the user must access the service site of the broadcast station from a computer terminal to access the desired ECG information or enter a keyword in the search portal site for finding and accessing the ECG information. Exchanging ECG information between users also involves a very tedious procedure.

In view of the issues posed by conventional ECG services, a new and improved broadcast program providing system, a broadcast reception terminal, a browsing terminal, a computer program and a computer program product have been provided which allow the user to save (store) ECG information while watching a broadcast program, in order to prevent the broadcast program watching time from overlapping with the ECG information browsing time and that allow the user to browse ECG information independently of the watching environment of a broadcast program.

To address the issues described above and according to a preferred embodiment of the present invention, there is provided a broadcast program providing system comprising a broadcast program providing apparatus that provides a broadcast program, an ECG information providing apparatus that provides ECG information on the broadcast program, and a broadcast reception terminal capable of receiving the broadcast program and the ECG information. The broadcast reception terminal in this broadcast program providing system includes a storage information acquisition unit for acquiring storage information, which guides the user to ECG information, from the ECG information in response to a predetermined storage event. The broadcast program providing system further includes a storage information storage location in which storage information is stored and a browsing terminal that, in response to a predetermined browsing event, acquires the ECG information based on the storage information, stored in the storage information storage location.

According to this embodiment, the broadcast reception terminal such as a TV set, a Set Top Box (STB), and a personal computer (PC) uses the storage information acquisition unit to acquire storage information, which guides the user to ECG information, from the ECG information in response to the predetermined storage event. The acquired storage information is stored in the predetermined storage information storage location. Therefore, the browsing terminal can be used to acquire ECG information based on the storage information stored in the storage information storage location in response to the predetermined browsing event for browsing its content independently of the watching time and the watching environment of a broadcast program.

Storage information, which is meta information for guiding the browsing terminal to ECG information, may take one of various forms; for example, the storage information may be all ECG information itself, an ECG reference ID, or information for searching for an ECG reference ID.

The storage event may be an event that is entered from an operation terminal (for example, a remote control) of the broadcast reception terminal during the broadcast of a program or a preset event that is preset from the operation terminal used for operating the broadcast reception terminal. The storage event can also be a preset event that is started automatically based on the user's preference that is collected in advance.

The storage information storage location in which storage information is stored can be configured in various ways according to the configuration of the broadcast program providing system. For example, the storage information storage location may be provided in the broadcast reception terminal or the browsing terminal or in some other terminal accessible via a network. The storage information storage location may also be provided in the ECG information providing apparatus accessible via a network or in the storage server that provides the storage service. Note that the storage server need not always be a server dedicated for the storage service but may be a server that also functions as some other server such as the user information management server. Furthermore, the storage information storage location may be provided in the operation terminal such as a remote control used for operating the broadcast reception terminal or in an external storage medium. In still another mode, the storage information storage location may be a mail sent to a predetermined address or a terminal that receives the mail for storage it therein.

The browsing terminal, which accesses ECG information based on storage information to allow the user to browse the ECG information, is required only to have the browsing function for browsing unprocessed or processed ECG information. The browsing terminal may be a broadcast reception terminal or a portable browsing terminal such as a Personal Digital Assistant (PDA) or a portable phone.

A browsing event that enables the browsing terminal to access ECG information may be activated only for a predetermined period and, after the predetermined period, deactivated or may be activated indefinitely for browsing without setting a period. The predetermined period may be a period which starting time is fixed (for example, after the announcement of production or after the broadcast of a broadcast program), a period which ending time is fixed (for example, before the broadcast of a broadcast program or within a predetermined time after the broadcast of a broadcast program), or a period which starting and ending times are fixed. It is also possible to allow the storage information itself to include meta information for browsing-event activation or deactivation or to allow the ECG information providing apparatus side to control activation or deactivation.

To address the issues described above and according to another preferred embodiment of the present invention, there is provided a broadcast reception terminal capable of receiving a broadcast program provided by a broadcast program providing apparatus and ECG information provided by an ECG information providing apparatus. This broadcast reception terminal includes a storage information acquisition unit that acquires storage information, which guides the user to ECG information, from the ECG information in response to a predetermined storage event.

In this configuration, the storage information acquisition unit acquires storage information, which guides the user to ECG information, from the ECG information in response to a predetermined storage event. Therefore, the ECG information may be used based on the storage information independently of the watching time and the watching environment of a broadcast program.

The storage event may be an event that is entered from an operation terminal used for operating the broadcast reception terminal during the broadcast of a program or a preset event that is preset from the operation terminal used for operating the broadcast reception terminal. The storage event can also be a preset event that is started automatically based on the user's preference that is collected in advance. The storage information storage location in which the storage information is stored can be provided in the broadcast reception terminal.

Storage information, available for various purposes, can also be configured in such a way that, in response to a predetermined browsing event, the broadcast reception terminal acquires ECG information and browse it based on the storage information.

To address the issues described above and according to still another preferred embodiment of the present invention, there is provided a browsing terminal that may allow browsing of ECG information provided by an ECG information providing apparatus. The browsing terminal includes a storage information acquisition unit that acquires storage information, which guides the user to ECG information, from a predetermined storage information storage location in response to a predetermined browsing event and an ECG information acquisition unit that acquires the ECG information from the ECG service providing apparatus based on the acquired storage information so that browsing of the acquired ECG information is permitted.

In this configuration, independently of the watching time and the watching environment of a broadcast program, the storage information acquisition unit acquires storage information, which guides the user to ECG information, from the predetermined storage information storage location in response to the predetermined browsing event and the ECG information acquisition unit acquires ECG information from the ECG information providing apparatus based on the acquired storage information so that browsing of the acquired ECG information is permitted.

The browsing event is an event that, when generated, ECG information is browsed from the browsing terminal. The browsing event may be generated when the browsing software is started or when the menu of the browsing software is executed.

The browsing terminal may be a broadcast reception terminal or a portable browsing terminal. The storage information storage location may also be provided in the browsing terminal.

The browsing event that, when generated, allows the user to access ECG information from the browsing terminal may be activated only for a predetermined period and, after the predetermined period, deactivated for browsing or may be indefinitely activated for browsing without setting a period.

To address the issues described above and according to still another preferred embodiment of the present invention, there is provided an operation terminal used for operating a broadcast reception terminal capable of receiving a broadcast program provided by a broadcast program providing apparatus and electric content guide information provided by an electric content guide information providing apparatus. This operation terminal causes the broadcast reception terminal to acquire storage information, which guides the user to the electric content guide information, from the electric content guide information in response to a predetermined storage event. The operation terminal may further include a storage information storage location in which storage information is stored. The operation terminal is not limited to a special remote control but may be any terminal, such as a portable phone or a PDA, which can operate the broadcast reception terminal.

To address the issues described above and according to still another preferred embodiment of the present invention, there is provided an operation terminal used for operating a browsing terminal that may allow browsing of electric content guide information provided by an electric content guide information providing apparatus. This operation terminal causes the browsing terminal to acquire storage information, which guides the user to the electric content guide information, from a predetermined storage information storage location in response to a predetermined browsing event, and to acquire the electric content guide information from the electric content guide information providing apparatus based on the acquired storage information so that the acquired electric content guide information can be browsed.

The storage information storage location may also be provided in the browsing terminal. The operation terminal is not limited to a special remote control but may be any terminal, such as a portable phone or a PDA, which can operate the browsing terminal.

To address the issues described above and according to still another preferred embodiment of the present invention, there is provided a computer program and a computer program product that can be built in a broadcast reception terminal capable of receiving a broadcast program provided by a broadcast program providing apparatus and ECG information provided by an ECG information providing apparatus. This a computer program and computer program product causes the broadcast reception terminal to acquire storage information, which guides the user to ECG information, from the ECG information in response to a predetermined storage event.

To address the issues described above and according to still another preferred embodiment of the present invention, there is provided a computer program and a computer program product that can be built in a browsing terminal that may allow browsing of ECG information provided by an ECG information providing apparatus. This computer program and computer program product may cause the browsing terminal to acquire storage information, which guides the user to ECG information, from a predetermined storage information storage location in response to a predetermined browsing event and to acquire the ECG information from the ECG information providing apparatus based on the acquired storage information so that browsing of the acquired ECG information is permitted.

As described above, the preferred embodiments of the present invention may allow saving or storage of storage information, which guides the user to ECG information, while watching a broadcast program. Therefore, a user can watch the broadcast program and browse the storage information while preventing the broadcast program watching time from overlapping with the ECG information browsing time. In addition, because a browsing terminal can be used to access the ECG information based on the storage information that is stored, the ECG information can be browsed independently of the watching environment of the broadcast program.

### BRIEF DESCRIPTION OF THE DRAWINGS

The above and other objects, features and advantages of the present invention will become more apparent from the following description of the presently preferred exemplary embodiments of the invention taken in conjunction with the accompanying drawings, in which:
FIG. 1 is a block diagram showing a general configuration of a broadcast program providing system according to a preferred embodiment of the present invention;
FIG. 2 is a block diagram showing the overview of how ECG information is stored using the broadcast program providing system according to a preferred embodiment of the present invention;
FIG. 3 is a block diagram showing the overview of how ECG information is browsed using the broadcast program providing system according to a preferred embodiment of the present invention;
FIG. 4 is a diagram showing the hardware operation image and the operation time transition of the broadcast reception terminal and the browsing terminal that configure the broadcast program providing system according to a preferred embodiment of the present invention;
FIG. 5 is a diagram showing a combination pattern of the broadcast reception terminal 210 and the browsing terminal 250 that configure the broadcast program providing system according to a preferred embodiment of the present invention;
FIG. 6 is a diagram showing the transmission/delivery hardware configuration of the broadcast system, CATV system, and communication system of the broadcast program providing system according to a preferred embodiment of the present invention;
FIG. 7 is a diagram showing an example of the configuration of the broadcast reception terminal 210 and the browsing terminal 250 that configure the broadcast program providing system according to a preferred embodiment of the present invention;
FIG. 8 is a diagram showing the overview of the configuration of a storage service provider 360 that is one of the components configuring the broadcast program providing system according to a preferred embodiment of the present invention;
FIG. 9 is a diagram showing the generation of a storage event and the processing method of accumulation in the broadcast program providing system according to a preferred embodiment of the present invention;
FIG. 10 is a diagram showing another example of the generation of a storage event and the processing method of accumulation in the broadcast program providing system according to a preferred embodiment of the present invention;
FIG. 11 is a diagram showing a screen image when the Storage ECG Storage Information button is pressed on the broadcast reception terminal in the broadcast program providing system according to a preferred embodiment of the present invention;
FIG. 12 is a diagram showing a screen image when the ECG Menu button is pressed on the broadcast reception terminal in the broadcast program providing system according to a preferred embodiment of the present invention;
FIG. 13 is a diagram showing a screen image when the ECG Menu button is pressed on the broadcast reception terminal in the broadcast program providing system according to a preferred embodiment of the present invention;
FIG. 14 is a diagram showing a screen image of ECG browsing displayed on the broadcast reception terminal of the broadcast program providing system according to a preferred embodiment of the present invention;
FIG. 15 is a diagram showing a screen image of ECG browsing displayed on the broadcast reception terminal of the broadcast program providing system according to a preferred embodiment of the present invention;
FIG. 16 is a diagram showing a screen image of ECG browsing displayed on the broadcast reception terminal of the broadcast program providing system according to a preferred embodiment of the present invention;
FIG. 17 is a flowchart showing the operation for displaying an ECG menu on the broadcast reception terminal of the broadcast program providing system according to a preferred embodiment of the present invention.
FIG. 18 is a flowchart showing the operation for storage ECG storage information on the broadcast reception terminal of the broadcast program providing system according to a preferred embodiment of the present invention;
FIG. 19 is a flowchart showing the operation for browsing ECG storage information on the browsing terminal of the broadcast program providing system according to a preferred embodiment of the present invention;
FIG. 20 is a flowchart showing the operation for browsing ECG storage information on the browsing terminal of the broadcast program providing system according to a preferred embodiment of the present invention;
FIG. 21 is a flowchart showing the operation for storage ECG storage information using a data broadcast on the broadcast reception terminal of the broadcast program providing system according to a preferred embodiment of the present invention;
FIG. 22 is a flowchart showing the operation for storage ECG storage information using a data broadcast on the broadcast reception terminal of the broadcast program providing system according to a preferred embodiment of the present invention;
FIG. 23 is a flowchart showing the operation for browsing ECG storage information using a network server on the browsing terminal of the broadcast program providing system according to a preferred embodiment of the present invention;
FIG. 24 is a flowchart showing the operation for browsing ECG storage information using a network server on the browsing terminal of the broadcast program providing system according to a preferred embodiment of the present invention;
FIG. 25 is a diagram showing the time control of storage metadata in the broadcast program providing system according to a preferred embodiment of the present invention;
FIG. 26 is a diagram showing an example of the description of metadata stored on the broadcast reception terminal of the broadcast program providing system according to a preferred embodiment of the present invention;
FIG. 27 is a diagram showing an example of the description of metadata stored when the user is away from home in the broadcast program providing system according to a preferred embodiment of the present invention;
FIG. 28 is a diagram showing an example of the description of program metadata in the broadcast program providing system according to a preferred embodiment of the present invention.
FIG. 29 is a diagram showing an example of the description of content metadata in the broadcast program providing system according to a preferred embodiment of the present invention;
FIG. 30 is a diagram showing an example of the description of content-related (linked) metadata in the broadcast program providing system according to a preferred embodiment of the present invention.
FIG. 31 is a diagram showing an ECG information notification screen displayed on the broadcast reception terminal of the broadcast program providing system according to a preferred embodiment of the present invention;
FIG. 32 is a diagram showing an ECG information notification screen displayed on the broadcast reception terminal of the broadcast program providing system according to a preferred embodiment of the present invention;
FIG. 33 is a diagram showing an example of browsing of program information stored in the broadcast program providing system according to a preferred embodiment of the present invention;
FIG. 34 is a flowchart showing the processing for determining the storage content and the storage means of ECG information in the broadcast program providing system according to a preferred embodiment of the present invention;
FIG. 35 is a flowchart showing the processing for browsing ECG information in the broadcast program providing system according to a preferred embodiment of the present invention;
FIG. 36 is a diagram showing a screen of storage reservation processing in the broadcast program providing system according to a preferred embodiment of the present invention;
FIG. 37 is a diagram showing a screen of storage reservation processing in the broadcast program providing system according to a preferred embodiment of the present invention;
FIG. 38 is a diagram showing a screen of storage reservation processing in the broadcast program providing system according to a preferred embodiment of the present invention;
FIG. 39 is a diagram showing a screen of storage reservation processing in the broadcast program providing system according to a preferred embodiment of the present invention;
FIG. 40 is a diagram showing a screen of storage reservation processing in the broadcast program providing system according to a preferred embodiment of the present invention;
FIG. 41 is a flowchart showing the storage reservation processing in the broadcast program providing system according to a preferred embodiment of the present invention; and
FIG. 42 is a flowchart showing the storage reservation processing in the broadcast program providing system according to a preferred embodiment of the present invention.

### DESCRIPTION OF THE PREFERRED EMBODIMENTS

Preferred embodiments of the present invention will be described in detail with reference to the attached drawings. In the description below and the attached drawings, the same reference numeral is attached to the components with approximately the same function and configuration to omit duplicated descriptions.

### (1. Broadcast program providing system where ECG service is available)

### (1-1 General configuration of broadcast program providing system)

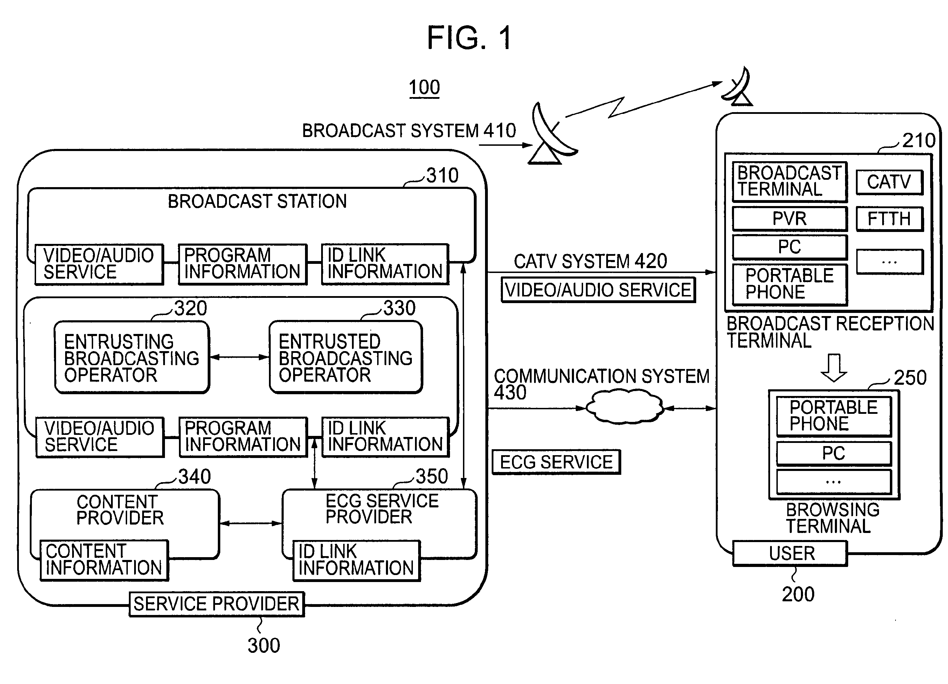

First, a broadcast program providing system 100 according to a preferred embodiment of the present invention will be described with reference to FIG. 1. FIG. 1 is a block diagram showing the general configuration of a broadcast program providing system according to a preferred embodiment of the present invention.

As shown in FIG. 1, the broadcast program providing system 100 according to a preferred embodiment of the present invention is divided into a user side 200 which uses the service and a service providing side 300 which provides the service. The service providing side 300 sends broadcast programs (video and audio service) and ECG information (ECG service) to the user side 200 via a broadcast system 410, a cable television (CATV) system 420, and a communication system 430.

The broadcast system 410 may be adopted as one of various types of system according to the broadcast terminal (for example, television set, portable terminal, mobile terminal, etc.). More specifically, the medium of the broadcast system 410 may be a terrestrial analog broadcast, a terrestrial digital broadcast, a Broadcasting Satellite (BS) analog broadcast, a BS digital broadcast, a 124/128° Communication Satellite (CS) broadcast, and a 110° CS broadcast, for example.

The medium of the CATV system 420 may be a CATV digital broadcast and a CATV analog broadcast, for example. The medium of the communication system 430 is, for example, a broadband Internet communication system via an optical fiber, an Asymmetric Digital Subscriber Line (ADSL), a telephone modem, and a portable phone video service.

The user side 200 includes a broadcast reception terminal 210 capable of receiving a broadcast program and ECG information provided by the service providing side 300 and a browsing terminal 250 capable of receiving ECG information. The broadcast reception terminal 210 and the browsing terminal 250 can be a fixed device used in the home such as a television set or a PC or a portable device used outdoors such as a portable phone or a PDA.

The broadcast reception terminal 210 is a device capable of receiving a broadcast program and ECG information provided by the service providing side 300. The broadcast reception terminal 210 is, for example, a television-like broadcast terminal, a CATV, a Personal Video Recorder (PVR), a Fiber To The Home (FTTH) terminal, a PC, and a portable phone.

The browsing terminal 250 is a device that allows the user to browse at least ECG information directly or in an edited from. The browsing terminal 250 can be integrated with the broadcast reception terminal 210 described above or can be configured as a device separate from the broadcast reception terminal 210 described above such as a portable phone, a PC, and a PDA.

The service provider 300, which provides broadcast programs and ECG information, includes devices such as those having the function of a broadcast station 310, an outsourcing broadcasting operator 320, an outsourced broadcasting operator 330, a content provider 340, and an ECG service company 350. The devices of the service provider 300 can include devices such as computers, various media recorders, editing devices, transmission/reception devices, and image display devices.

The broadcast station 310 includes devices for producing and broadcasting broadcast programs, for producing EPG/ECG information, and for providing the EPG service and the ECG service. The broadcast station 310 produces broadcast programs (video and audio service), EPG information (program information), and ECG information (ID link information), and sends them to the user side 200 via the broadcast system 410, CATV system 420, or communication system 430. The broadcast station 310 can produce and compile broadcast programs and produce and provide program information, such as ECG, for introducing the programs, all by itself.

The broadcast station 310 may include the devices of the outsourcing broadcasting operator 320 that outsource the production of broadcast programs and the devices of the outsourced broadcasting operator 330 that produces broadcast programs and delivers the produced broadcast programs to the outsourcing broadcasting operator. In this case, the task can be divided between the two operators; that is, the outsourcing broadcasting operator 320 is in charge of the production of broadcast programs and the meta-production of the EPG/ECG service and the outsourced broadcasting operator 330 is in charge of the provision of broadcast programs and EPG or ECG service to the user by via the broadcast system.

In addition, the service provider 300 may include devices of the content provider 340 that produces content information such as broadcast programs and the devices of the ECG service company 350 that produces ECG information. The content provider 340 can perform the meta-production of content information required for the ECG service. The ECG service company 350 can attach ID link information on the content information to a program required for the ECG service. In addition, the service provider 300 may include a mail-sending server (not shown) that sends the EPG service or the ECG service to the user by mail. (1-2. ECG service)

Next, the concept of the ECG service that uses the broadcast program providing system described above will be described briefly. The ECG service, a service that increases the versatility of the EPG service, provides the user not only with broadcast program information on a broadcast program but also with metadata created as ECG information that is added the broadcast program. This ECG information is provided for guiding the user to various broadcast-program related contents delivered and accumulated on a communication network such as the Internet.

In the conventional ECG service, the ECG information can be browsed while a broadcast program is being broadcast. This means that the user who wants to browse ECG information must temporarily suspend watching the broadcast program, or reduce the screen, for displaying and browsing the ECG information. This requires the user to watch a broadcast program and browse ECG information at the same time and, therefore, the user does not feel the service very convenient to use. In addition, if added to a CM that is broadcast for a relatively short time, ECG information does not produce an effective advertisement effect.

In addition, browsing ECG information remotely from the watching environment of a broadcast program is very tedious. For example, suppose that the user wants to confirm an ECG-information related content after watching a broadcast program. In that case, the user must access the service site of the broadcast station from a computer terminal to access the desired ECG or enter a keyword in the search portal site for finding and accessing the ECG information. Exchanging ECG information between users also involves a very tedious procedure.

In the broadcast program providing system according to a preferred embodiment of the present invention, the concept of storage information is introduced to address the issues described above. Storage information, which guides a browsing terminal to ECG information, may be the ECG information itself, an ECG reference ID, or information for searching for an ECG reference ID.

Managing storage information and ECG information separately as described above allows the user to separate the storage information from the ECG information for using them individually. This makes it possible to access the ECG information, based on the storage information stored in a predetermined storage information storage location, without having to access the ECG information at the same time the program is being broadcast as in the conventional system. Therefore, the ECG information may be accessed at any time and in any environment.

### (2. ECG information storage/browsing service)

### (2-1. ECG information storage information service)

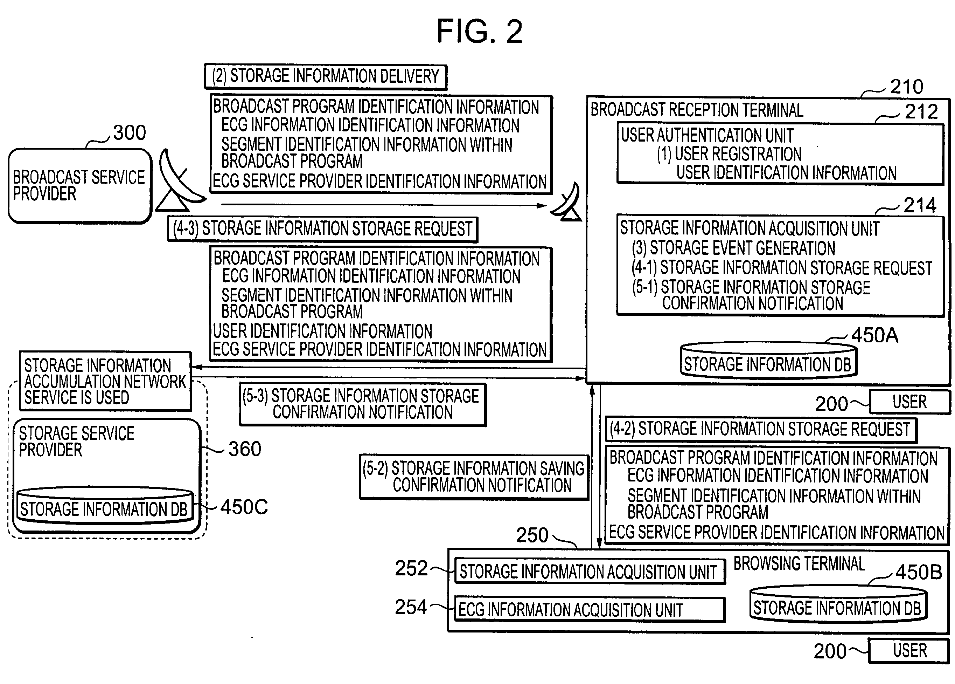

Next, with reference to FIG. 2, the overview of the ECG information storage service, which uses the broadcast program providing system shown in FIG. 1, will be described. FIG. 2 is a block diagram showing the overview of the ECG information storage service that uses the broadcast program providing system according to a preferred embodiment of the present invention.

As shown in the figure, a system that can use the ECG information storage service according to a preferred embodiment of the present invention includes the broadcast service provider 300, the broadcast reception terminal 200, the browsing terminal 250, and a storage information DB (database) 450 (450A, 450B, 450C, 450D) in which storage information is stored.

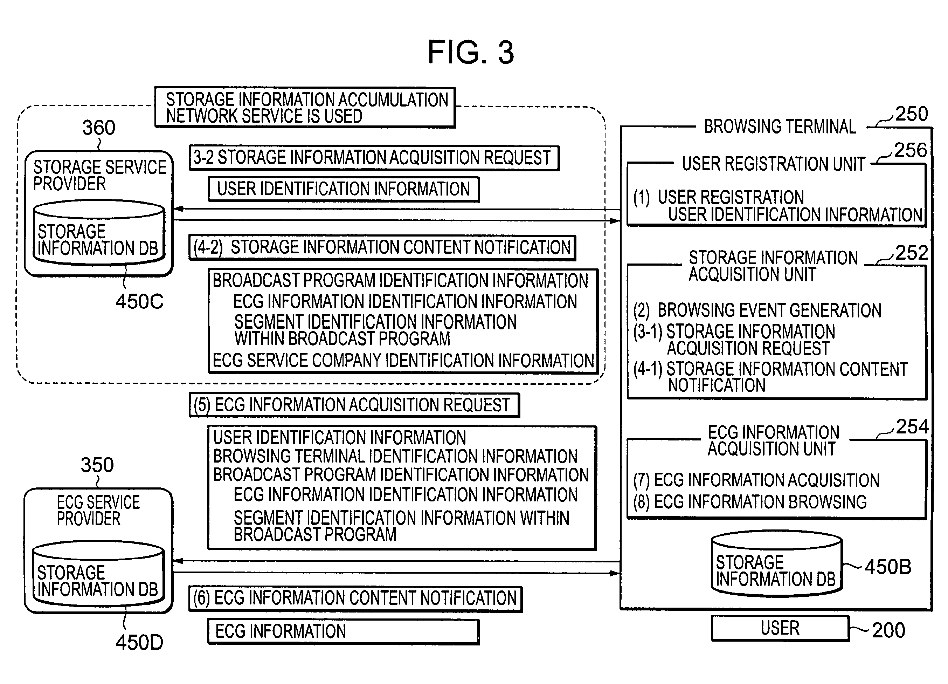

The storage information storage location, in which storage information is stored, can be set in various ways according to the system configuration. For example, in the example shown in FIG. 2, the storage information storage location is provided in the broadcast reception terminal as a storage information DB 450A, and in the browsing terminal 250 as a storage information DB 450B. Alternatively, in an environment where a storage accumulation network service is used, the storage information storage location can be provided in a storage service provider 360 as a storage information DB 450C or, as shown in FIG. 3, in the ECG service provider 350 as a storage information DB 450D. The ECG service provider 350, which also manages storage information, may use the storage information DB 450D to manage the ECG information entities using the storage information.

Although not shown in the figure, the storage information DB 450 may also be provided in an operation terminal capable of remotely controlling the broadcast reception terminal 210 or the browsing terminal 250 or in various portable external storage media that can be inserted into various devices. The storage information DB 450 can also be included in a mail issued to a predetermined address for later browsing by the browsing terminal 250.

To receive the ECG information storage service, the broadcast reception terminal 210 at least includes a storage information acquisition unit 214 capable of acquiring storage information from ECG information in response to a predetermined storage event. The broadcast reception terminal 210 shown in the figure further includes a user authentication unit 212 for authenticating a user who uses the service and the storage information DB 450A used as the storage information storage location. The storage information DB can reside in any location in the system but need not be always in the broadcast reception terminal 210.

To receive the ECG information storage service, the browsing terminal 250 acquires ECG information based on the storage information stored in the storage information storage location in response to a predetermined browsing event, as will be described later with reference to FIG. 3, so that the ECG information may be browsed. For this purpose, the browsing terminal 250 includes a storage information acquisition unit 252 that acquires storage information from a predetermined storage information storage location in response to a predetermined browsing event and an ECG information acquisition unit 254 that acquires ECG information from the ECG service provider (ECG information providing apparatus) based on the acquired storage information so that browsing of the acquired ECG information is permitted. Although the browsing terminal 250 shown in the figure includes the storage information DB as the storage information storage location, the storage information DB can reside in any location in the system but need not be always in the browsing terminal 250.

Next, the procedure for using the ECG information storage service in the system described above will be described.

First, the user authentication unit 212 of the broadcast reception terminal 210 registers a user before the user uses the ECG information storage service. User registration is not always required, but is optional, for using the ECG information storage service.

Next, when a predetermined storage event occurs, the storage information acquisition unit 214 issues a storage information storage request. The storage event is an event that activates a transaction for acquiring storage information from the ECG information. A storage event can be configured as an event used by the user to store favorite ECG information during the broadcasting of the program. A storage event can also be configured as a preset event that is started when a preset condition occurs that is preset by a user based on the preference information.

Storage information that guides the user to ECG information may include the following information: broadcast program identification information that identifies a broadcast program, ECG information identification information that identifies a program and a content linked to the ECG information that is set up for the broadcast program, segment identification information within broadcast program that identifies a segment when the broadcast program is divided into segments by a relative time from the broadcast program start time, user identification information that identifies a user who uses the ECG service, ECG provider identification information that identifies an ECG service provider, and browsing terminal identification information that identifies a browsing terminal for browsing ECG information. Storage information is used for guiding a browsing terminal to ECG information; therefore, storage information is not limited to the information described above but may be configured as various types of information according to the system configuration.

Anyway, when a storage event occurs, the storage information acquisition unit 214 acquires storage information, which is metadata, from the ECG information. Next, the storage information acquisition unit 214 issues a request to store the acquired storage information and stores the acquired storage information in the predetermined storage information storage location 450. After the acquired storage information is stored, the storage information acquisition unit 214 receives a storage information save (storage) confirmation notification from the storage information storage location 450 and completes the ECG storage task. The detailed flow of the ECG storage task will be described later.

### (2-2. ECG information storage information browsing service)

Next, with reference to FIG. 3, the following describes the overview of the ECG information storage information browsing service using the broadcast program providing system shown in FIG. 1. FIG. 3 is a block diagram showing the overview of the ECG information storage information browsing using the broadcast program providing system according to a preferred embodiment of the present invention.

As shown in the figure, the system for using the ECG information storage information browsing service includes the browsing terminal 250 and the storage information storage location 450. The browsing terminal 250 includes the storage information acquisition unit 252, the ECG information acquisition unit 254 and, as necessary, a user registration unit 256 and the storage information DB 450B. The units of the browsing terminal 250 have been described with reference to FIG. 1 and FIG. 2 and, therefore, the detailed description is omitted.

As described above, the storage information storage location 450 can be set up in various ways according to the system configuration. Although the storage information storage location 450 is provided in the browsing terminal 250, ECG service provider 350, and storage service provider 360 in the example shown in the figure, the storage information storage location 450 is required to be provided in only one of them. In addition, the storage information storage location 450 may be provided in an operation terminal used for operating the browsing terminal 250 or in a portable external storage medium.

Next, the following describes how to receive the storage information browsing service in the system described above. First, to use the ECG information browsing service according to a preferred embodiment of the present invention, the user must be registered in advance to define user identification information. Next, when a predetermined browsing event occurs, the storage information acquisition unit 252 issues a storage information acquisition request to the predetermined storage information storage location 450. If the issued storage information acquisition request is valid, the storage information storage location 450 sends a storage information content notification. Next, the ECG information acquisition unit 254, guided by the acquired storage information, accesses the ECG information to acquire the ECG information. In addition, the ECG information acquisition unit 254 processes the acquired ECG information into a form that can be browsed and then displays the processed ECG information. Although the storage information is used to guide the browsing terminal to the corresponding ECG information, the storage information need not be information that requires the browsing terminal operator to be concerned with the browsing information itself; that is, the storage information may be linked seamlessly with the ECG information.

### (3. Hardware configuration of broadcast program providing system)

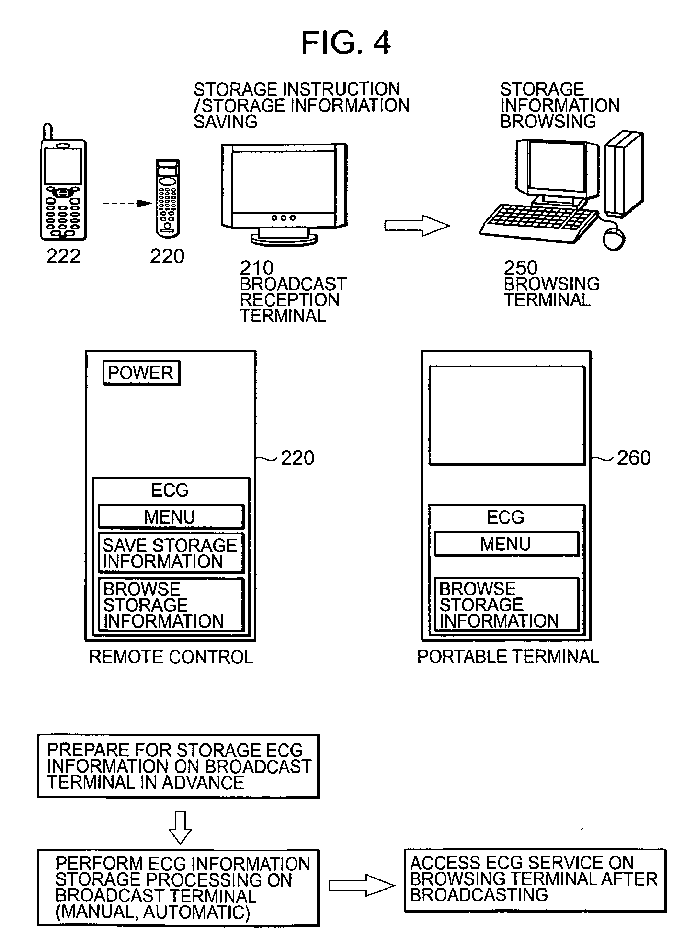

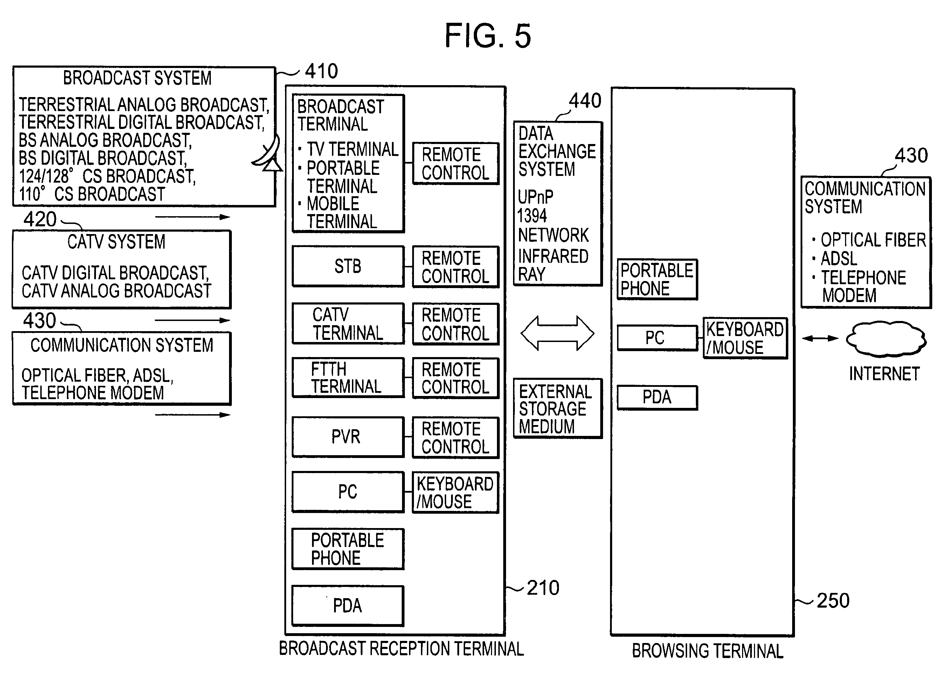

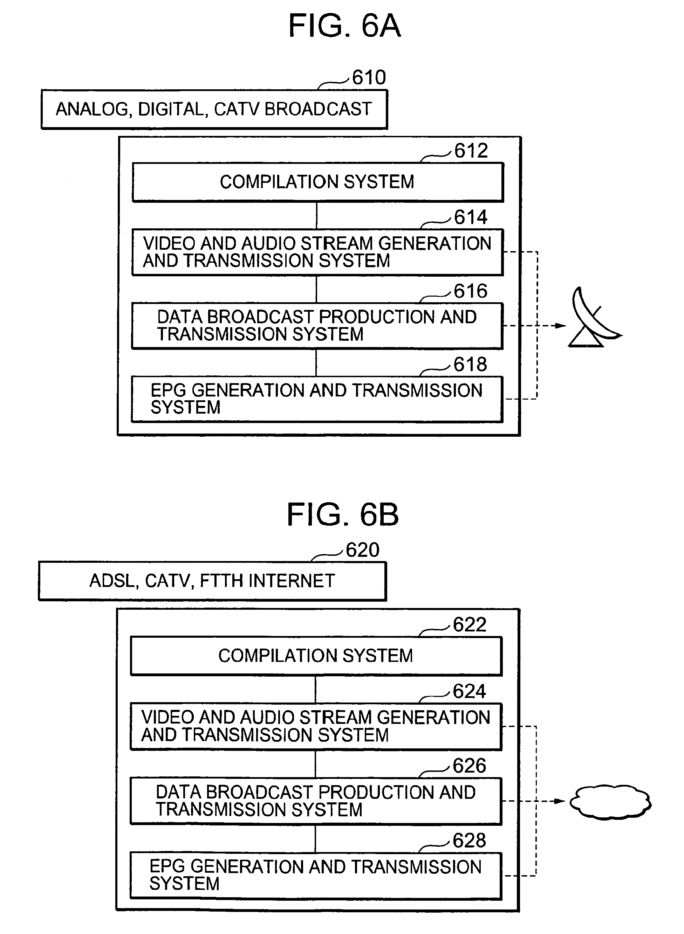

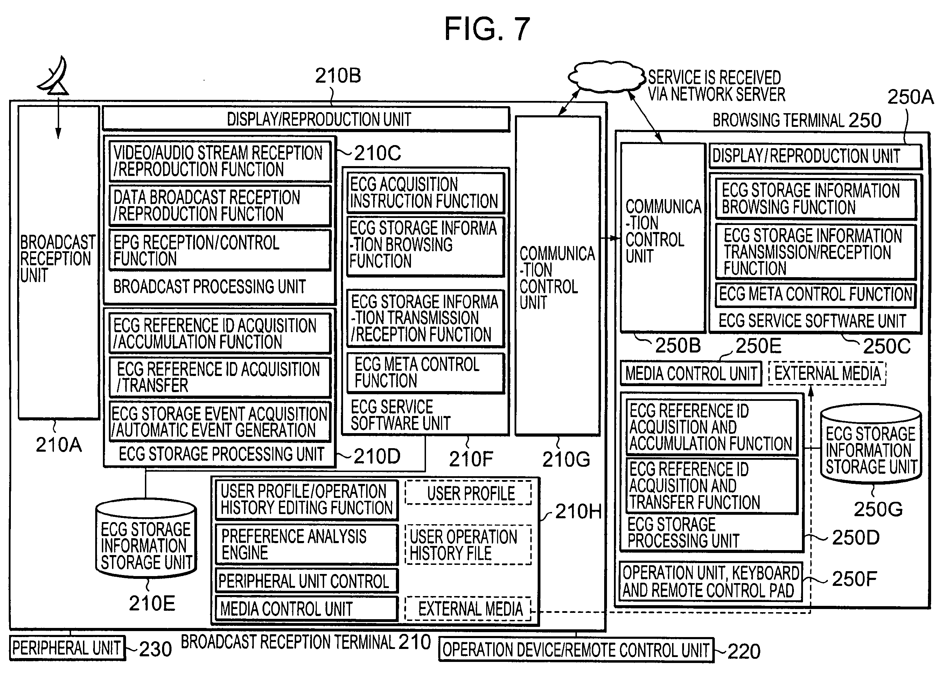

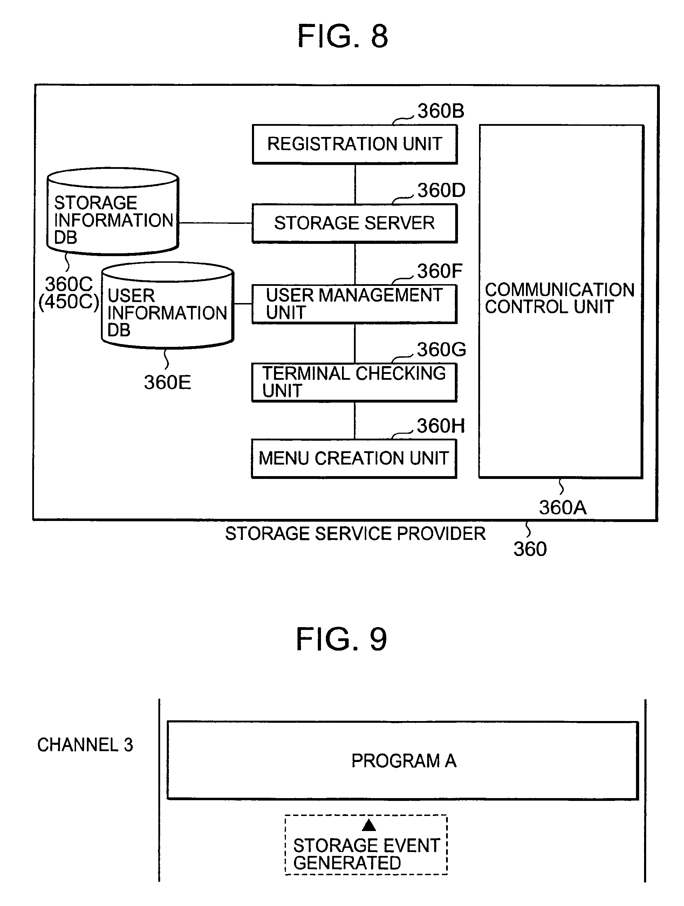

Next, with reference to FIG. 4 to FIG. 8, an example of the actual hardware configuration of the broadcast program providing system 100 according to a preferred embodiment of the present invention will be described. FIG. 4 is a diagram showing the hardware operation image and the operation time transition of the broadcast reception terminal 210 and the browsing terminal 250 that configure the broadcast program providing system according to a preferred embodiment of the present invention. FIG. 5 is a diagram showing a combination pattern of the broadcast reception terminal 210 and the browsing terminal 250 that configure the broadcast program providing system according to a preferred embodiment of the present invention. FIG. 6 is a diagram showing the transmission/delivery hardware configuration of the broadcast system, CATV system, and communication system of the broadcast program providing system according to a preferred embodiment of the present invention. FIG. 7 is a diagram showing an example of the configuration of the broadcast reception terminal 210 and the browsing terminal 250 that configure the broadcast program providing system according to a preferred embodiment of the present invention. FIG. 8 is a diagram showing the overview of the configuration of the storage service provider 360 that is one of the components configuring the broadcast program providing system according to a preferred embodiment of the present invention.

First, with reference to FIG. 4, the following describes how the storage instruction operation, storage information storage operation, and storage information browsing operation are performed in the broadcast program providing system according to a preferred embodiment of the present invention. As shown in FIG. 4, the storage instruction operation and the storage information storage operation on a television set, one of broadcast reception terminals 210, can be performed using, for example, a remote control 220 that can remotely control the broadcast reception terminal 210 via an infrared ray. In addition to the standard ECG menu, the "Save Storage Information" button and the "Browse Storage Information" button are provided on the remote control 220.

The user can prepare for storage of ECG information in advance or store ECG information while a broadcast program is being broadcast. If the ECG information to be stored is known before the broadcast, the user uses the remote control 220 to prepare for storage of the ECG information on the broadcast reception terminal 210. In response to a preset event, the broadcast reception terminal 210 acquires the storage information from the ECG information and stores the acquired storage information in the predetermined storage information storage location. In another configuration, user's preference information is collected in advance and the broadcast reception terminal 210 automatically presets a storage event. If the preset event occurs, the storage information is acquired from the ECG information and the acquired storage information is stored in the storage information storage location. In still another configuration, the user presses the "Save Storage Information" button on the remote control 220 when the user finds ECG information to be stored while a broadcast program is being broadcast. In this case, the storage information is acquired from the ECG information based on the storage information storage request, and the acquired storage information is stored in the storage information storage location.

The user need not always use the special remote control 220 to operate the broadcast reception terminal 210. Instead, the system may be configured in such a way the user operates the broadcast reception terminal 210 itself or use the transmission function of a portable phone 222 to operate the broadcast reception terminal 210.

To confirm the ECG information using the broadcast reception terminal 210 after a broadcast program was broadcast, the user presses the "Browse Storage Information" button of the remote control 220. Then, the ECG information guided by the storage information is acquired and displayed on the broadcast reception terminal 210. In the example shown in the figure, the broadcast reception terminal 210 functions as the browsing terminal 250. The browsing terminal 250 need not always be a TV-like broadcast reception terminal 210. As shown in the figure, the browsing terminal 250 may also be configured as a PC connected to the Internet or as a portable terminal 260, such as a PDA or a portable phone, which can access the ECG information.

Next, with reference to FIG. 5, the following describes a hardware combination pattern of the broadcast reception terminal 210 and the browsing terminal 250 that configure the broadcast program providing system according to a preferred embodiment of the present invention.

The broadcast reception terminal 210 receives broadcast programs and ECG information via the broadcast system 410, CATV system 420, or communication system 430. The broadcast system 410, CATV system 420, and communication system 430 are already described with reference to FIG. 1 and therefore they are not described here to omit the duplicated descriptions.

The broadcast reception terminal 210 can be configured by a combination of various devices. For example, as shown in FIG. 5, the broadcast reception terminal 210 can be configured as one of the following combinations: a broadcast terminal (such as a TV terminal, and a portable terminal, and a mobile terminal) and a remote control; an STB and a remote control; a CATV terminal and a remote control; an FTTH terminal and a remote control; a PVR and a remote control; a PC and a keyboard/mouse; a standalone device such as a portable phone and a PDA.

The browsing terminal 250 is connected to the Internet via the communication system 430 for accessing ECG information. This browsing terminal 250 can also be configured by a combination of various devices. The browsing terminal 250 can be configured by the same devices used for the broadcast reception terminal 210. However, with consideration for Internet accessibility or external accessibility, the browsing terminal 250 can be configured as separate devices such as a portable phone, a PDA, or a combination of a PC and a keyboard/mouse, for example, as shown in FIG. 5.

Storage information transfer between the broadcast reception terminal 210 and the browsing terminal 250 can also be carried out via a data exchange system 440 such as UPnP (Universal Plug and Play), IEEE (Institute of Electrical and Electronic Engineers) 1394, a network, or an infrared ray or via an external storage medium such as a memory stick and a memory card.

FIG. 6 shows the transmission/delivery hardware configuration of the broadcast system, CATV system, and communication system of the broadcast program providing system according to a preferred embodiment of the present invention.

As shown in FIG. 6A, a system 610 that transmits an analog, digital, or CATV broadcast includes a compilation system 612 that generates and edits a broadcast program and EPG information, a video and audio stream generation and transmission system 614 that generates and transmits video and audio streams, a data broadcast production and transmission system 616 that produces and transmits a data broadcast, and an EPG generation and transmission system 618 that generates and transmits EPG information.

Similarly, as shown in FIG. 6B, a system 620 that delivers an ADSL, CATV, and FTTH communication mainly includes a compilation system 622 that generates and edits a broadcast program and EPG information, a video and audio stream generation and transmission system 624 that generates and transmits video and audio streams, a data broadcast production and transmission system 626 that produces and transmits a data broadcast, and an EPG generation and transmission system 628 that generates and transmits EPG information.

FIG. 7 is a diagram showing an example of the configuration of the broadcast reception terminal 210 and the browsing terminal 250 that configure the broadcast program providing system according to a preferred embodiment of the present invention.

As described above, the broadcast reception terminal 210 is required to have at least the storage information acquisition unit. More specifically, the broadcast reception terminal 210 mainly includes a broadcast reception unit 210A, display/reproduction unit 210B, a broadcast processing unit 210C, an ECG storage processing unit 210D, an ECG storage information storage unit 210E, an ECG service software unit 210F, a communication control unit 210G, and a miscellaneous functional unit 210H. The broadcast reception terminal 210 further includes an operation unit/remote control unit 220 and a peripheral unit 230 as external units. Therefore, in an actual device, a storage information acquisition unit can be configured by combining all or some of those units.

The broadcast reception unit 210A is a functional unit that receives a video/audio stream, EPG SI information, and a data broadcast.

The display/reproduction unit 210B is a functional unit that displays and reproduces a video, an EPG application, and an ECG application.

The broadcast processing unit 210C, composed of a video/audio stream reception/reproduction functional unit, a data broadcast reception/reproduction functional unit, and an EPG reception/control functional unit, is a functional unit that receives and reproduces a video stream, receives and reproduces a data broadcast, receives and controls an EPG, and acquires and accumulates an ECG reference ID (storage information).

The ECG storage processing unit 210D, composed of an ECG reference ID acquisition/accumulation functional unit, an ECG reference ID acquisition/transfer functional unit, and an ECG storage event acquisition/automatic event generation functional unit, is a functional unit that acquires and accumulates an ECG reference ID, transfers an ECG reference ID to other units, acquires an ECG storage event, and generates an automatic event.

The ECG storage information storage unit 210E is a functional unit that saves and stores ECG information.

The ECG service software unit 210F, composed of an ECG acquisition instruction unit, an ECG storage information browsing functional unit, an ECG storage information transmission/reception functional unit, and an ECG meta control functional unit, is a software functional unit that implements a GUI for performing data processing and operation of the ECG service. The ECG acquisition instruction unit is a functional unit that registers the preference for programs and the types of contents in advance when the ECG service of the program is acquired and, based on that information, accumulates information related to the ECG service. The ECG storage information browsing functional unit is a functional unit used for browsing already stored ECG information. The ECG storage information transmission/reception functional unit is a functional unit that transmits accumulated ECG reference IDs to a browsing terminal or receives them from other devices via the communication control unit. The ECG meta control functional unit manages and controls various types of meta information. For example, the ECG meta control functional unit manages the effective period of meta information to prevent ineffective meta information from being used.

The communication control unit 210G is a functional unit that performs various communication control operations (for example, stores an ECG reference ID in a server and acquires ECG information based on an ECG reference ID) and transfers an ECG reference ID to the browsing terminal 250.

The miscellaneous functional unit 210H includes a user profile/operation history editing function, a preference analysis engine, a peripheral unit control function, and a media control unit, for example. The user profile/operation history editing function is a functional unit that saves and edits user preference information and operation history and accesses the user profile and the user operation history file. The preference analysis engine is an engine that analyzes the user preference and searches for a favorite program and content. The peripheral unit control function is a functional unit that controls external HDDs and printers connected to the broadcast reception terminal. The media control unit controls external storage media such as an external memory medium and a flash memory. Data can be transferred to and from the browsing terminal 250 or other broadcast reception terminals using this external memory media.

As described above, the browsing terminal 250 is required to have at least the storage information acquisition unit 252 and the ECG information acquisition unit 254. More specifically, the browsing terminal 250 includes a display/reproduction unit 250A, a communication control unit 250B, an ECG service software unit 250C, an ECG information storage processing unit 250D, a media control unit 250E, an operation unit (for example, a keyboard, a remote control pad, etc.) 250F, and an ECG storage information storage unit 250G. To configure an actual unit of the browsing terminal 250, those units are used singly or in combination to configure the storage information acquisition unit or the ECG information acquisition unit.

The display/reproduction unit 250A is a functional unit that displays and reproduces a video, an EPG application, and an ECG application.

The communication control unit 250B is a functional unit that performs various communication control operations (for example, stores an ECG reference ID in a server and acquires ECG information based on an ECG reference ID) and transfers an ECG reference ID to the browsing terminal 250.

The ECG service software unit 250C, composed of an ECG storage information browsing functional unit, an ECG storage information transmission/reception functional unit, and an ECG meta control functional unit, is a software functional unit that implements a GUI for performing data processing and operation of the ECG service. The ECG storage information browsing functional unit is a functional unit used for browsing already stored ECG information. The ECG storage information transmission/reception functional unit is a functional unit that transmits accumulated ECG reference IDs to a browsing terminal or receives them from other devices via the communication control unit. The ECG meta control functional unit manages and controls various types of meta information. For example, the ECG meta control functional unit manages the effective period of meta information to prevent ineffective meta information from being used.

The ECG information storage processing unit 250D, composed of an ECG reference ID acquisition and accumulation functional unit and an ECG reference ID acquisition and transfer functional unit, is a functional unit that acquires and accumulates an ECG reference ID, acquires an ECG storage event, and generates an automatic event.

The media control unit 250E controls external storage media such as an external memory medium and a flash memory. The media control unit 250E can transfer data to and from the browsing terminal 250 and other broadcast reception terminals using those external memory media.

The operation unit (for example, a keyboard, a remote control pad, etc.) 250F is a unit for operating the broadcast reception terminal. The operation unit is a remote control when the broadcast reception terminal is a TV set, a mouse and a keyboard when the broadcast reception terminal is a PC, and a mini-pad when the broadcast reception terminal is a portable phone and a PDA.

The ECG storage information storage unit 250G is a functional unit that stores ECG information.

FIG. 8 shows the overview of the configuration of the storage service provider 360 that is one of the components configuring the broadcast program providing system according to a preferred embodiment of the present invention. Although storage information can be stored in the broadcast reception terminal 210, browsing terminal 250, and various storage information storage locations, the storage service provider 360, which saves storage information, may also be provided in the broadcast program providing system for storing and managing storage information. The storage service provider 360 need not necessarily be a dedicated server but may be a server that also functions as the user information management server.

As shown in FIG. 8, the storage service provider 360 includes a communication control unit 360A that controls the communication, a registration unit 360B, a storage server 360D that manages a storage information DB 360C (storage information storage location 450), a user management unit 360F that manages a user information DB 360E, a terminal checking unit 360G that manages terminal information, and a menu creation unit 360H.

### (4. Storage event generation and storage method)

Next, with reference to FIG. 9, the storage event generation and storage method will be described. There are two types of event according to how the event is generated; one is an event generated by operating a remote control while a broadcast program is broadcast and the other is a preset event that is automatically activated based on preset information. A data broadcast may or may not be used for event generation processing. To save (store) storage information (for example, an ECG reference ID), an ECG reference ID can be stored directly or information used for searching for an ECG reference ID can be stored. When an ECG reference ID can be transmitted by the broadcast system or the communication system, the ECG reference ID can be stored directly. Conversely, when an ECG reference ID cannot be transmitted by the broadcast system or the communication system, it is also possible to store the channel information and the event generation information for later use in searching for the ECG reference ID. In this case, the stored information is searched for as necessary at a later time to obtain the ECG reference ID.

More specifically, a storage event is generated and stored in one of the following ways:
(4-1) A storage event is received as a data broadcast content and, based on the script of the data broadcast content, the ECG reference ID that is set in the data broadcast content is accumulated in the user-specified storage location.
(4-2) A storage event is received as a data broadcast content and, based on the script of the data broadcast content, the ECG reference ID that is set in the communication server is accumulated in the user-specified storage location.
(4-3) A storage event is received by the broadcast reception terminal and the channel information and the storage event generation time are stored in the memory. When the search operation is required, an inquiry is sent to the communication server to accumulate the ECG reference ID in the user-specified storage location.
(4-4) Based on the remote control operation history item, the Save ECG button operation time, and the channel number pressed immediately before, an inquiry is sent to the communication server when the search operation is necessary to obtain and accumulate the ECG reference ID.
(4-5) In addition, the ECG reference ID can also be obtained and accumulated based on the user specified contents. In that case, the user who is away from home enters the keyword and the absolute time of a program to find the channel number. Based on the channel number and the absolute time, an inquiry is sent to the ECG service server to obtain and accumulate the ECG reference ID.

Next, the following describes how to accumulate, at storage time, a specified part of information provided by the ECG service. In this case, it is also possible to obtain ECG information based on an ECG reference ID and display the obtained ECG information as a menu to allow the user to specify and save the program information and the content information included in the ECG information, not the program information itself.

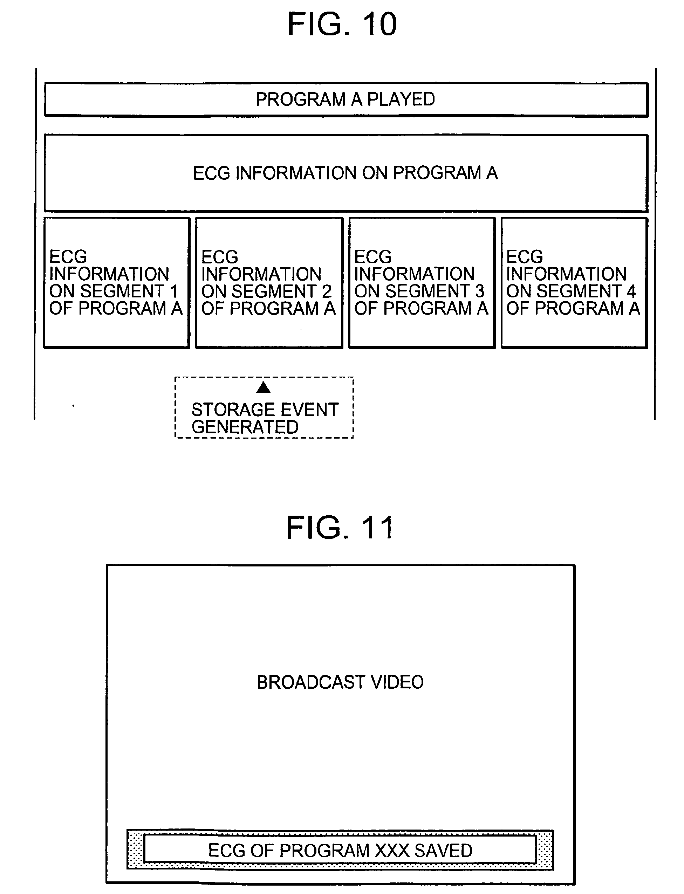

Next, with reference to FIG. 10, the following describes how to accumulate storage information provided by the ECG service on a time basis in the program broadcast. As shown in FIG. 10, the storage operation can be performed for the pieces (called segments) of information created by dividing the program into pieces according to the relative time from the start of the program.

The following shows an example. Each of four 30-minute blocks of a two-hour program can be treated as one segment. If each segment has ECG information, the storage information can also be accumulated and browsed. When the broadcast program is a baseball broadcast, pieces of divided meaningful information, such as information on all plate appearances of a batter, can be collected into one segment. When such a segment has ECG information, the ECG information can be stored.

### (5. Screen image)

Next, with reference to FIG. 11 to FIG. 16, the screen images of a broadcast reception terminal and a browsing terminal will be described.

FIG. 11 shows a storage screen image displayed when the Save ECG Storage Information button of the remote control is pressed on the broadcast reception terminal. As shown in the figure, when the Save ECG Storage information button is pressed, ECG storage processing is performed for the broadcast image, and the message "ECG of Program XXX Stored" appears for a while and then disappears.

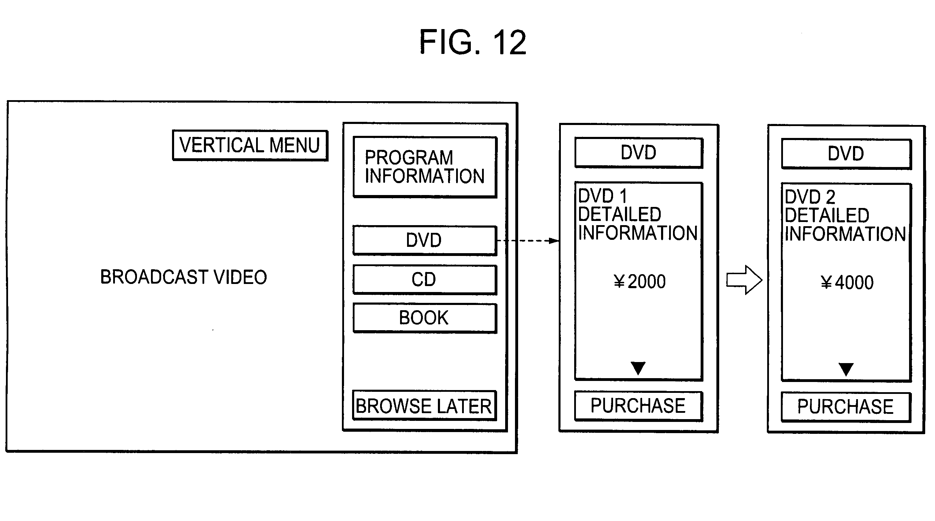

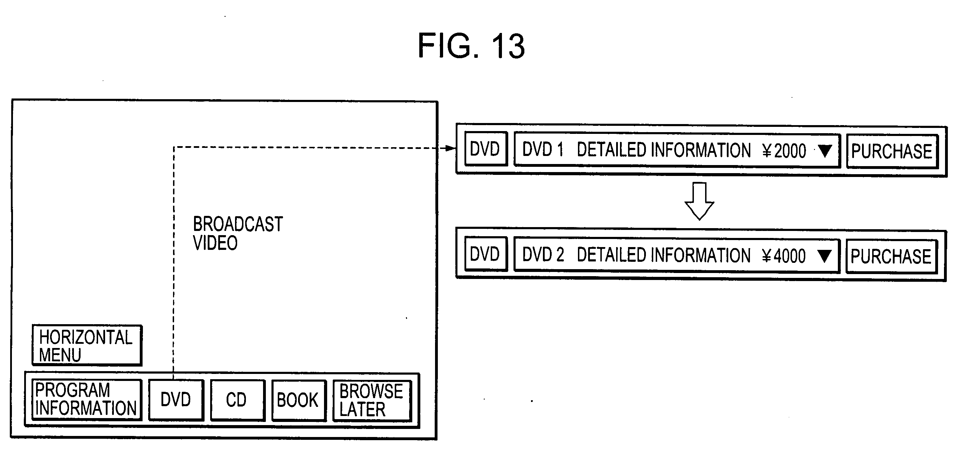

FIG. 12 and FIG. 13 show the screen images displayed on the broadcast reception terminal when the ECG Menu button of the remote control is pressed. As shown in the figure, when the ECG Menu button is pressed, the ECG menu is displayed on the broadcast image. FIG. 12 shows an example of the vertical type menu, and FIG. 13 shows an example of the horizontal menu. When the user selects DVD from the ECG menu, the ECG information shown in the right half of the figure is displayed as a popup. As shown in the screen images in FIG. 12 and FIG. 13, the "Browse Later" button is provided in the ECG menu. When the user wants to store the ECG information for later browsing, the user presses this "Browse Later" button to save the storage information corresponding to the ECG information.

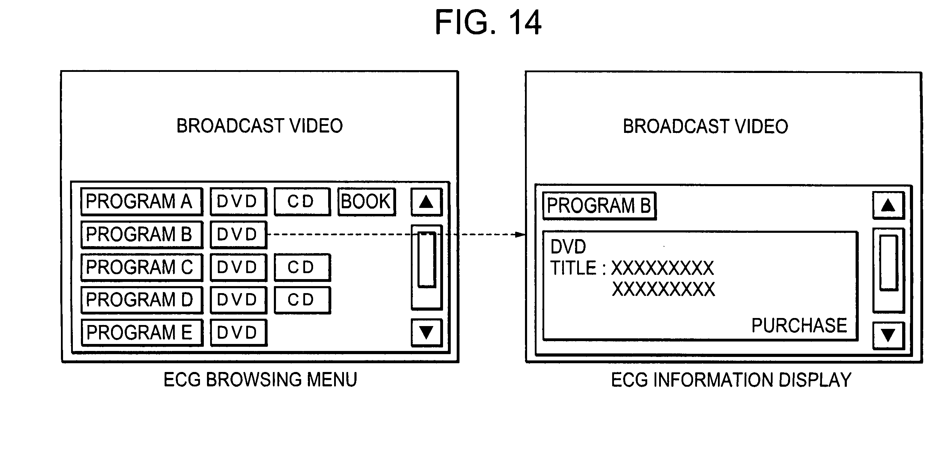

FIG. 14 to FIG. 16 show the screen images of the browsing terminal.

FIG. 14 is a diagram showing an ECG browsing screen image displayed on a TV set. As shown in the figure, when the user presses the Browse ECG button on the broadcast reception terminal or the browsing terminal, the ECG browsing menu is displayed. In addition, when the user presses a particular program button in the ECG browsing menu, the ECG information related to the program button is displayed in the broadcast video.

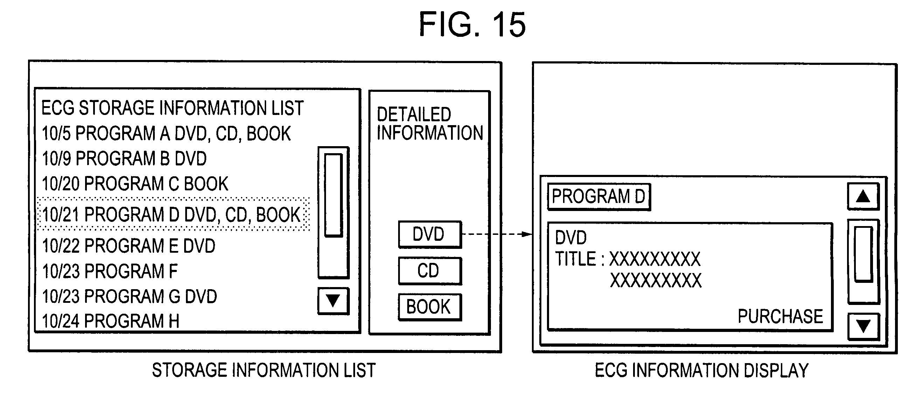

FIG. 15 is a diagram showing a screen image when an ECG is browsed on the ECG browsing terminal. As shown in the figure, when the user presses the Browse ECG button, the ECG storage information list is displayed. In addition, when the user presses a particular program button in the ECG storage information list, the ECG information related to the program button is displayed in the broadcast video.

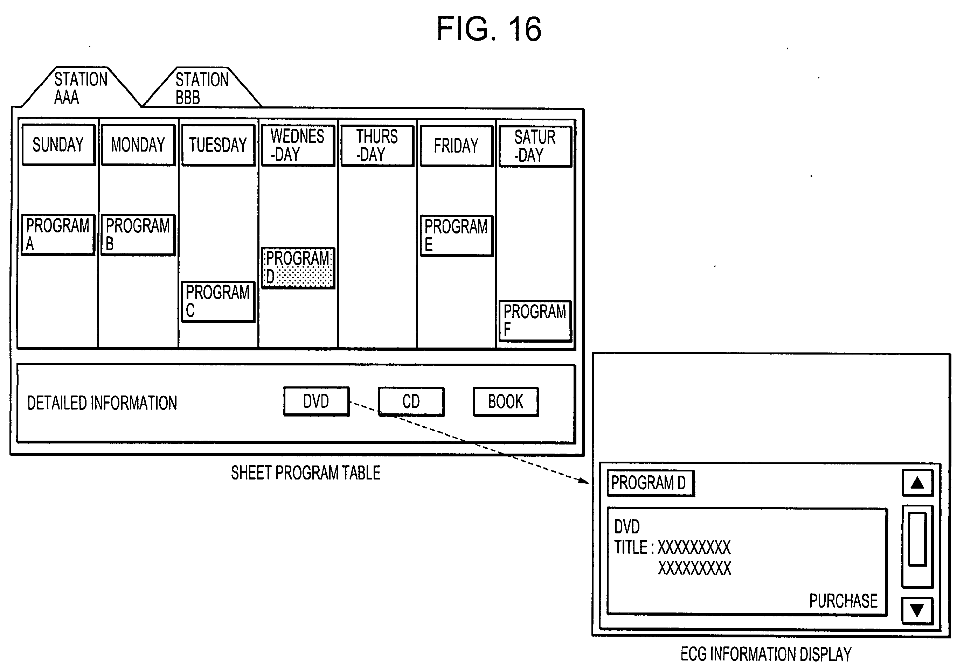

As with FIG. 15, FIG. 16 is a diagram showing a screen image displayed when an ECG is browsed on the ECG browsing terminal. As shown in the figure, when the user presses the Browse ECG button, the ECG storage information list is displayed. Note that, in this case, the ECG storage information list is displayed in the sheet program table format. That is, the ECG storage information list is displayed for each broadcast station with the tab menu that may allow selection of a broadcast station. In addition, when the user presses a particular program button in the ECG storage information list, the ECG information related to the program button is displayed during the broadcast of the video.

### (6. Storage information storage operation flow)

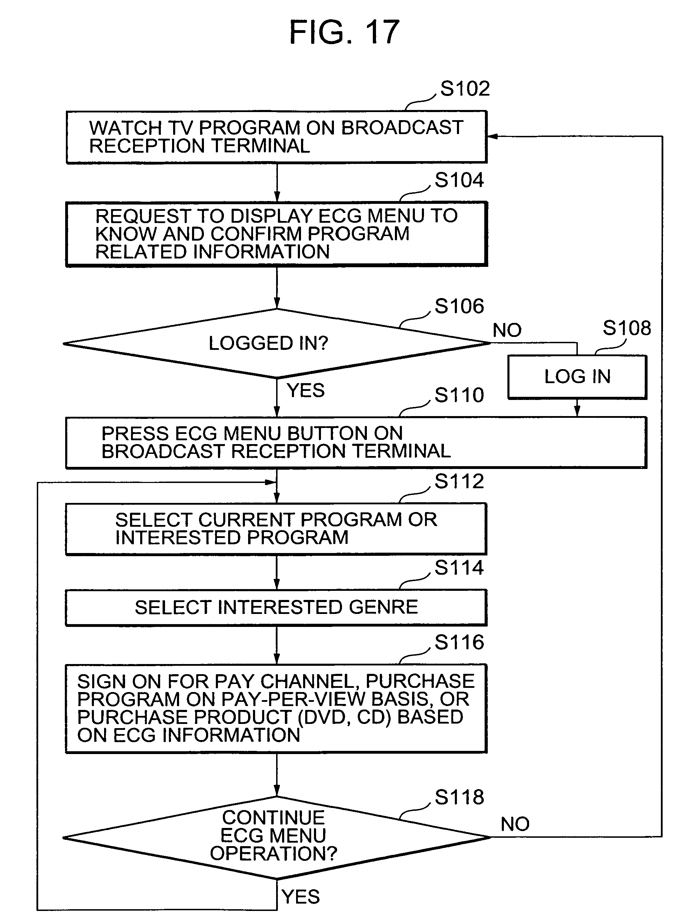

Next, with reference to FIG. 17 to FIG. 24, the storage information storage operation flow will be described.

FIG. 17 is a flowchart showing the operation for displaying the ECG menu on a broadcast reception terminal. When the user is watching a TV program on a broadcast reception terminal (S102) and wants to display the ECG menu to know and confirm program related information (S104), the operation described below is performed. First, whether the user has logged in the ECG storage service is checked (S106). If not, the user first logs in the service (S108).

After confirming that the user has successfully logged in, the user presses the ECG Menu button on the broadcast reception terminal (S110). Next, the user selects the current program or an interested program (S112). After that, the user selects an interested genre (S114) . In this way, the user can sign on for a pay channel, purchase a program on a pay-per-view basis, or purchase a product (DVD, CD) based on the ECG information (S116). After a series of steps are completed, the user is asked whether to continue the ECG menu operation (S118). If the user wants to continue, control is passed back to step S112 and the user selects a program again; if the user does not want to continue, control is passed back to step S102 to watch the program.

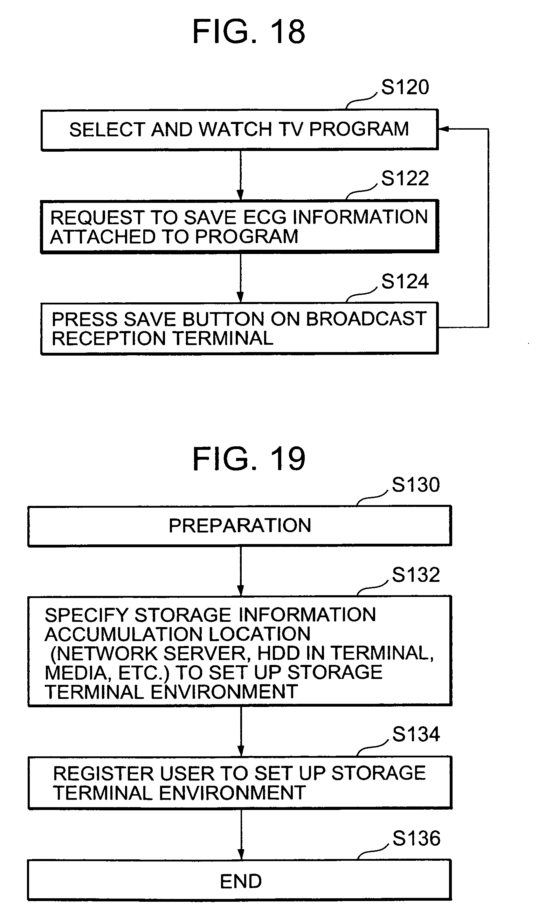

FIG. 18 is a flowchart showing the operation executed when ECG storage information is stored on a broadcast reception terminal. As shown in the figure, when the user watches a TV program (S120) and wants to store ECG information attached to the program (S122), the user presses the Save button on the broadcast reception terminal (S124). This operation obtains the storage information from the ECG information and saves the obtained storage information in the predetermined storage location.

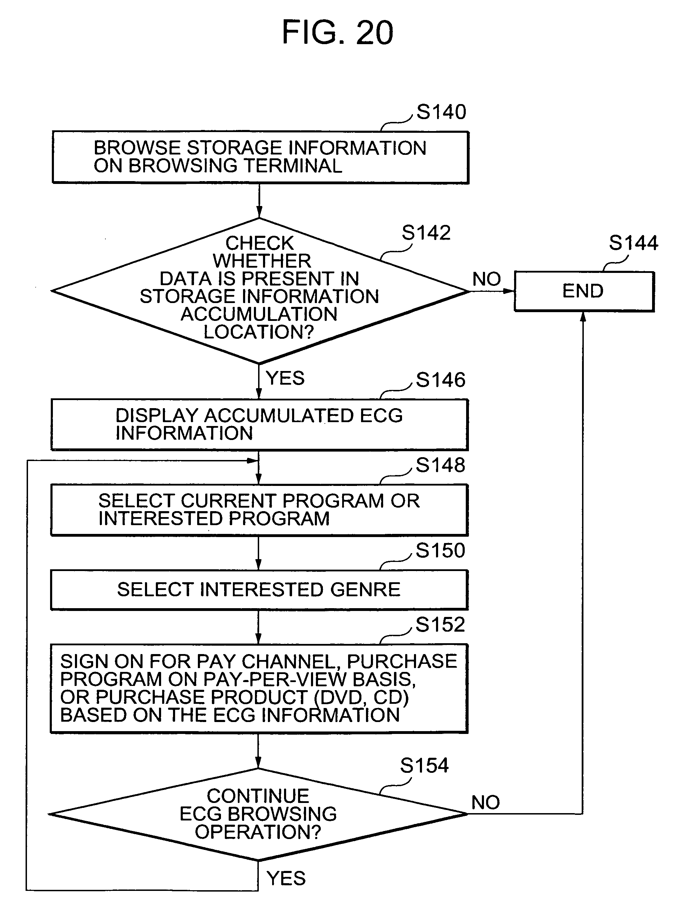

FIG. 19 and FIG. 20 are flowcharts showing the operation executed when storage information is browsed on a browsing terminal.

First, FIG. 19 is a flowchart showing the preparation that must be made before browsing storage information. To prepare for browsing (S130), the user first specifies a storage information storage location (network server, HDD in the terminal, media, etc.) (S132) to set up the environment of the storage terminal as shown in the figure. Next, to set up the environment of the storage terminal, the user is registered (S134) and the preparation flow is terminated (S136).

After completing the preparation shown in FIG. 19, the user browses storage information on the browsing terminal (S140). First, whether storage information data is present in the storage information accumulation location (storage information storage location) is checked (S142). If there is no data in the storage information storage location, the processing is terminated (S144). If there is data in the storage information storage location, the list of accumulated ECG information is displayed (S146). Then, the user selects the current program or an interested program from the list (S148). Next, the user selects an interested genre (S150). In this way, the user can sign on for a pay channel, purchase a program on a pay-per-view basis, or purchase a product (DVD, CD) based on the ECG information independently of the broadcast program watching time or the watching environment (S152). After a series of steps are completed, the user is asked whether to continue the ECG menu operation (S154). If the user wants to continue, control is passed back to step S148 and the user selects a program again; if the user does not want to continue, the processing is terminated (S144).

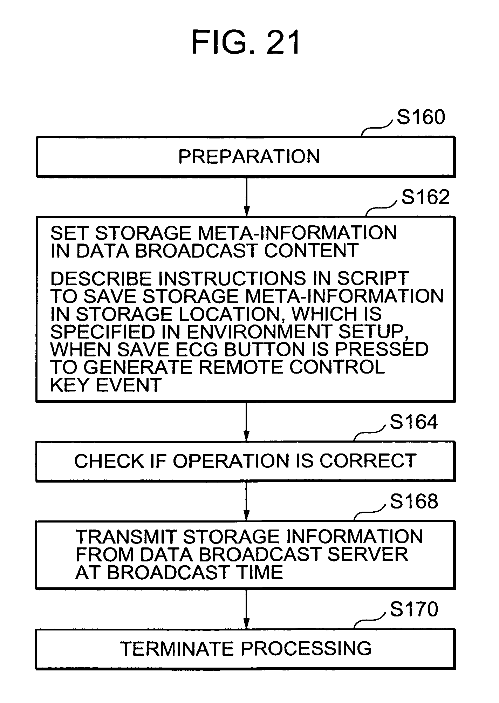

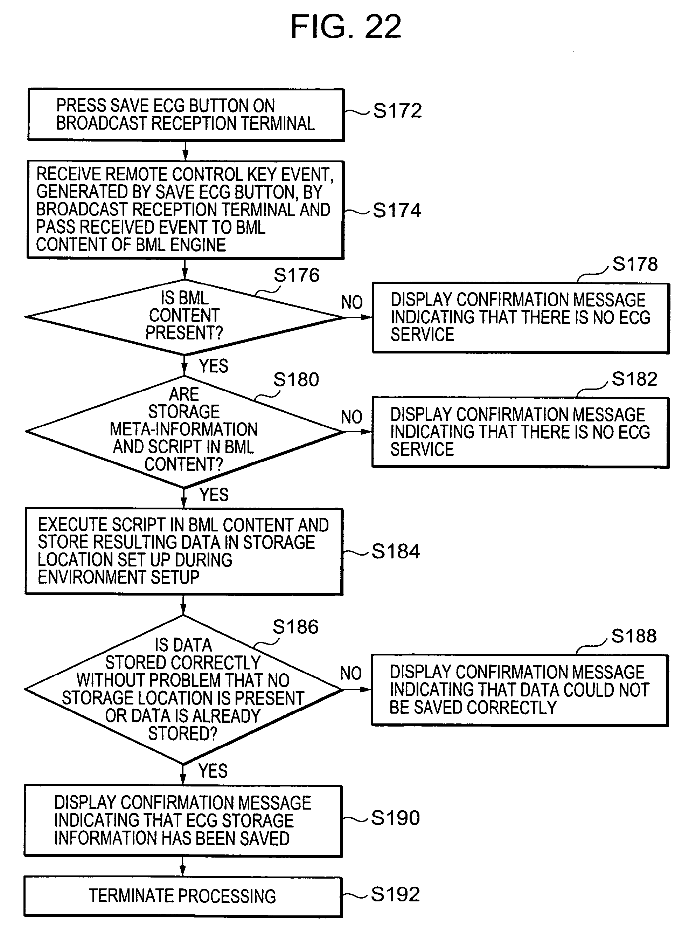

Next, with reference to FIG. 21 and FIG. 22, the flow of the processing will be described in which storage information is stored when a broadcast program and ECG information are provided as a data broadcast.

First, the preparation is made according to the flow shown in FIG. 21. To make preparation (S160), the storage meta information is set in the data broadcast content and, in the script, the instructions are described to save the storage meta information in the storage location, which is specified in the environment setup, when the Save ECG button is pressed to generate a remote control key event (S162). Next, whether the meta information described above operates correctly is checked (S164) and then the data broadcast server transmits the storage information at broadcast time (S168). Then, the preparation flow is terminated (S170).

After the preparation shown in FIG. 21 is completed, the Save ECG button is pressed on the broadcast reception terminal (S172), the remote control key event generated by the Save ECG button is received by the broadcast reception terminal, and the received event is passed to the BML content of the BML engine (S174). Next, whether the BML content is present is checked (S176). If the BML content is not present, a confirmation message is displayed indicating that there is no ECG service (S178). If the BML content is present, whether the storage meta information and a script are present in the BML content is checked (S180). If not present, a confirmation message is displayed indicating that there is no ECG service (S182). If present, the script in the BML content is executed and the resulting data is stored in the storage location set up during environment setup (S184). Next, whether data is stored correctly without a problem that no storage location is present or data is already stored (S186). If a problem is generated at storage time, a confirmation message is displayed indicating that the data could not be stored correctly (S188). If no problem is generated at a storage time, a confirmation message is displayed indicating that the ECG storage information has been stored (S190) and the storage information storage processing is terminated (S192).

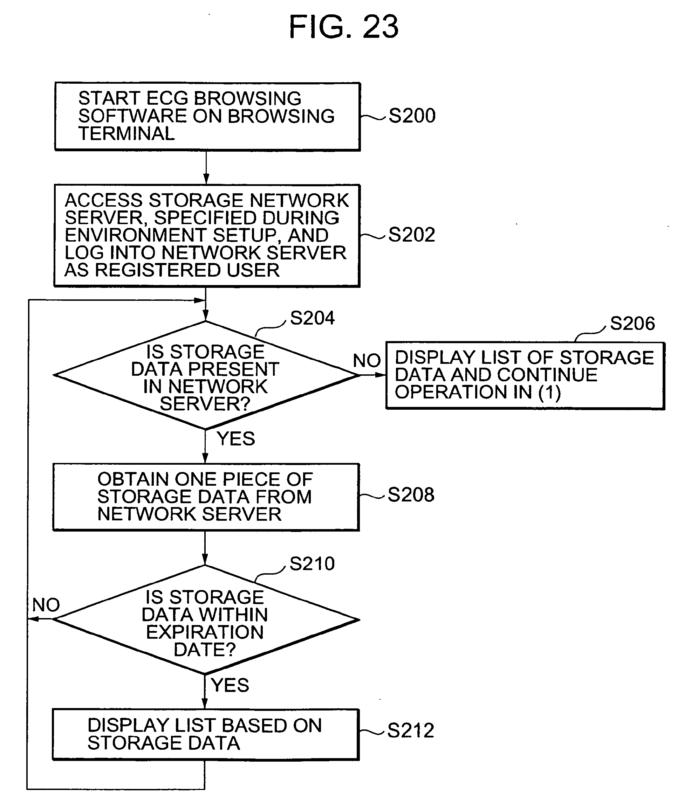

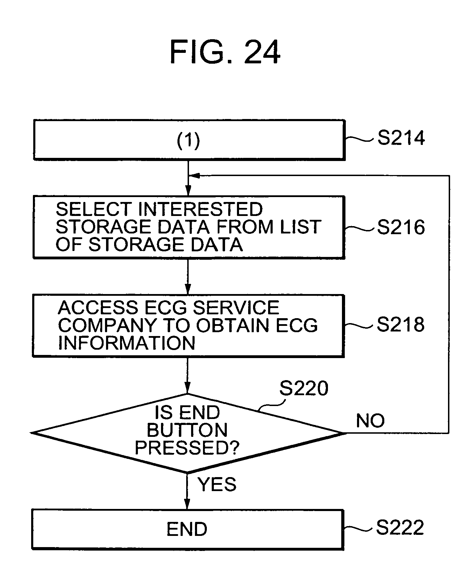

Next, with reference to FIG. 23 and FIG. 24, the flow of the processing will be described in which storage information is browsed using a network server.

When the ECG browsing software is started on the browsing terminal (S200), access is made to the storage network server, specified during environment setup, and a user logs into the network server as a registered user (S202). Next, whether storage data is present in the network server is checked (S204). If storage data is present, one piece of storage data is obtained from the network server (S208). Next, whether the storage data is within the expiration date is checked (S210). If the storage data is within the expiration date, a list is displayed based on the storage data (S212) and control is passed back to step S204 to check whether storage data is present in the network server is checked. If the storage data is not within the expiration date, control is also passed back to step S204 to check whether storage data is present in the network server is checked.

If it is found in step S204 that no storage data is present, a list of storage data is displayed and the operation is continued in step S214. Next, when the user selects interested storage data from the list of storage data (S216), access is made to the ECG service provider to obtain the ECG information (S218). Then, whether the End button is pressed is checked (S220) and, if the End button is not yet pressed, control is passed back to step S216 to select storage data from the list of storage data. If the End button is pressed, a series of processing is terminated (S222) .

### (6. Time control of storage metadata)

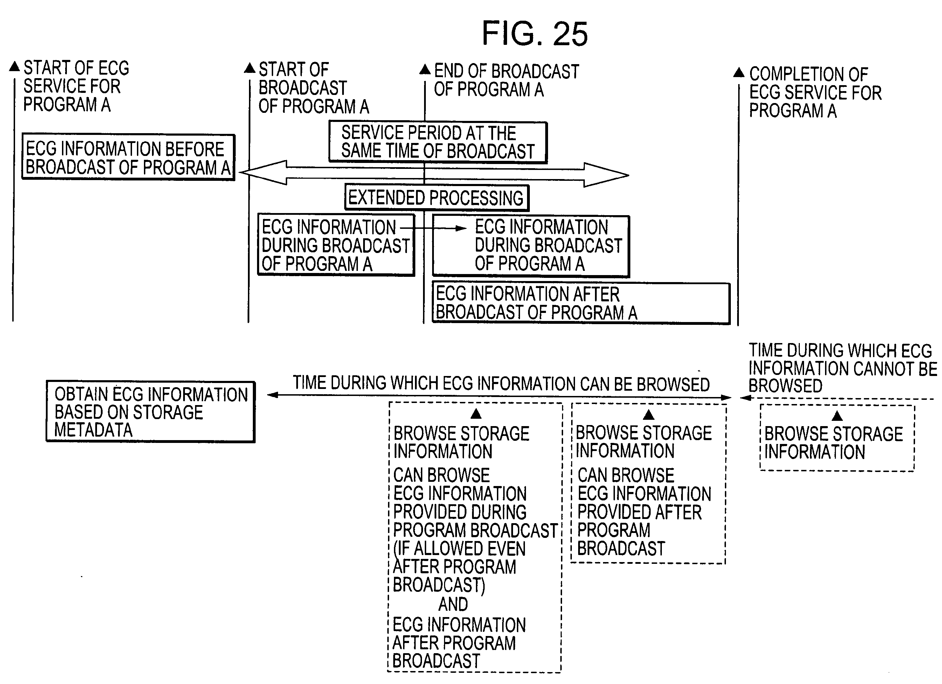

Next, with reference to FIG. 25, the time control of storage metadata will be described. Storage metadata is accumulated, for example, in the broadcast reception terminal via the remote control operation while a program is broadcast. The user can browse the storage information through the ECG service if the expiration date specified in the storage metadata is not yet expired and access is made during this ECG service period. It is possible to specify an expiration date for a browsing event, which can access ECG information, based on the storage information and to activate the browsing event only during that period. In some cases, the browsing content browsed after the broadcasting a program is provided as two separate types of ECG information, that is, ECG information on a program being broadcast at storage time and ECG information prepared after the broadcasting of a program. In this case, the user can select the content to be browsed. If, after the broadcasting, the service provider does not permit the supply of ECG information on a program provided during the broadcast of a program, the user can browse only ECG information provided after the broadcast.

Suppose that the ECG service is provided for program A as shown in FIG. 25. The ECG information is classified into the ECG information provided before the broadcast of program A (for example, forecast information), the ECG information provided during the broadcast of program A (for example, related product information), and the ECG information provided after the broadcast of program A (for example, information on criminal). The ECG information before the broadcast of program A can be browsed only before the broadcast of program A based on the storage metadata. The ECG information after the broadcast of program A can be browsed only after program A is broadcast and before the service is terminated. The ECG information provided during the broadcast of program A can be browsed not only during the broadcast but also, for a predetermined period, after the broadcast of the program is terminated. That is, during the period in which the ECG information provided during the broadcast of program A can be browsed, the user can browse one of two types of ECG information.

### (8. Example of metadata)

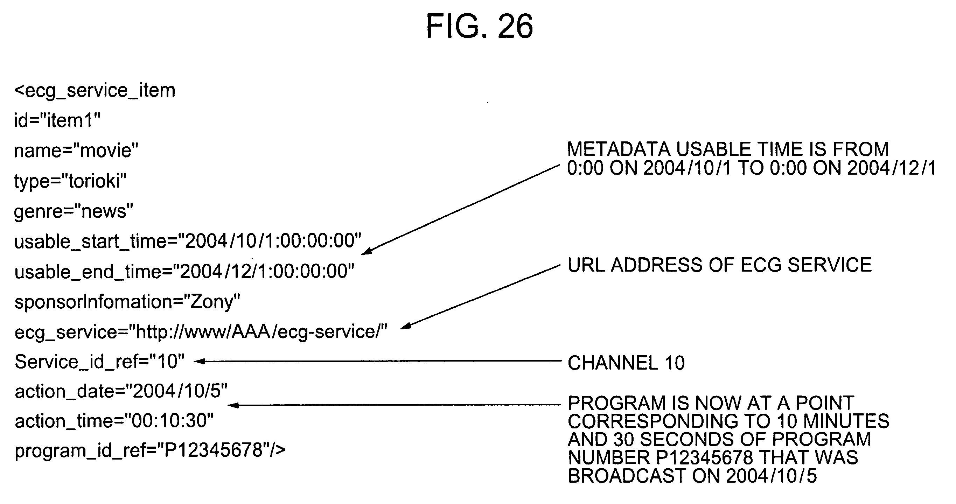

FIG. 26 to FIG. 30 shows an example of metadata attached to storage information.

FIG. 26 is a diagram showing an example of the description of metadata stored on a broadcast reception terminal. For example, the descriptions usable_start_time="2004/10/1:00:00:00" and usable_end_time="2004/12/1:00:00:00" indicate that the usable time of metadata is from 0:00 on 2004/10/1 to 0:00 on 2004/12/1. The description ecg_service="http://www/AAA/ecg-service/" indicates the URL address of the ECG service. The description service_id_ref="10" indicates that the channel is 10. The descriptions action_date="2004/10/5", action_time="00:10:30", and program_id_ref="P12345678" indicate that the program is now at a point corresponding to 10 minutes and 30 seconds after the start of the program number P12345678 that was broadcast on 2004/10/5.

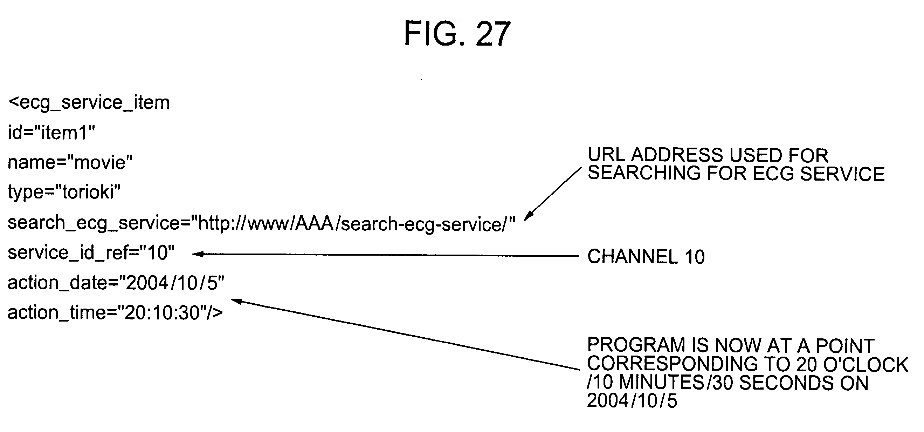

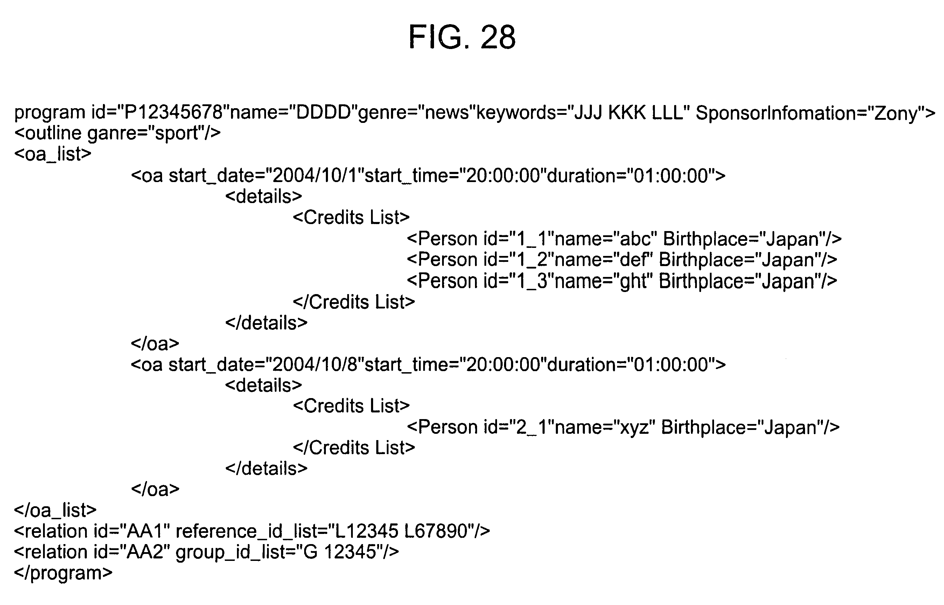

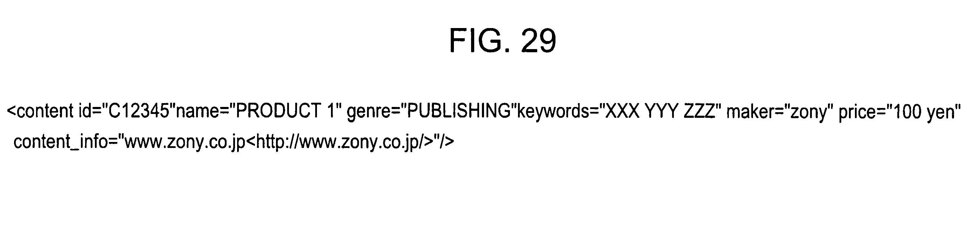

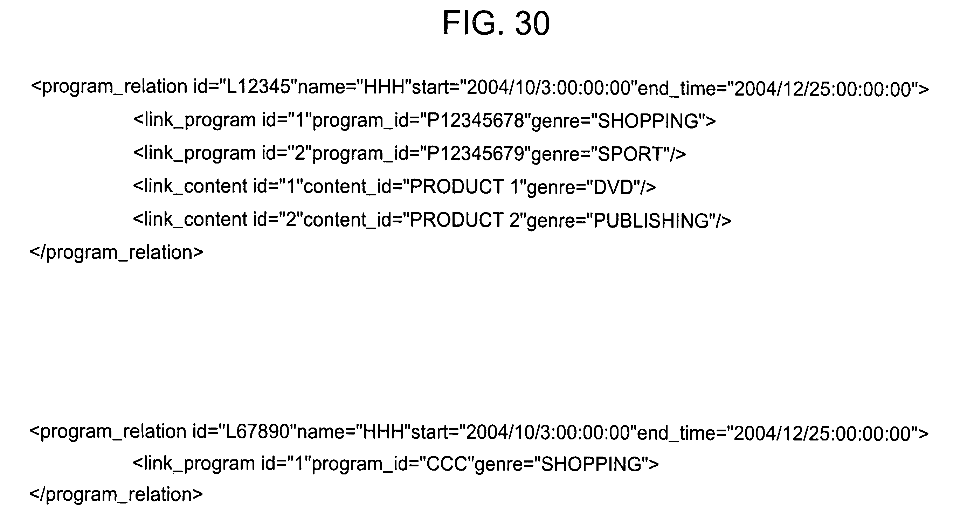

FIG. 27 shows an example of the description of metadata stored when the user is away from home. FIG. 28 shows an example of program metadata. FIG. 29 shows an example of the description of content metadata. FIG. 30 shows an example of the description of content-related (ID link) metadata.

### (9. Actual flow of ECG service)

First, referring to FIG. 31, the following describes an example of the screen configuration when ECG information is browsed during a broadcast. As shown in FIG. 31A, a broadcast program having ECG information displays a message on the screen indicating that the program has ECG information. At this time, when the user requests to browse ECG information using an operation unit such as a remote control, the broadcast program is displayed in a reduced form as shown in FIG. 31B, and an ECG information window is displayed as a popup. In the example shown in the figure, the program information, related content information, and keyword information are displayed on the screen.

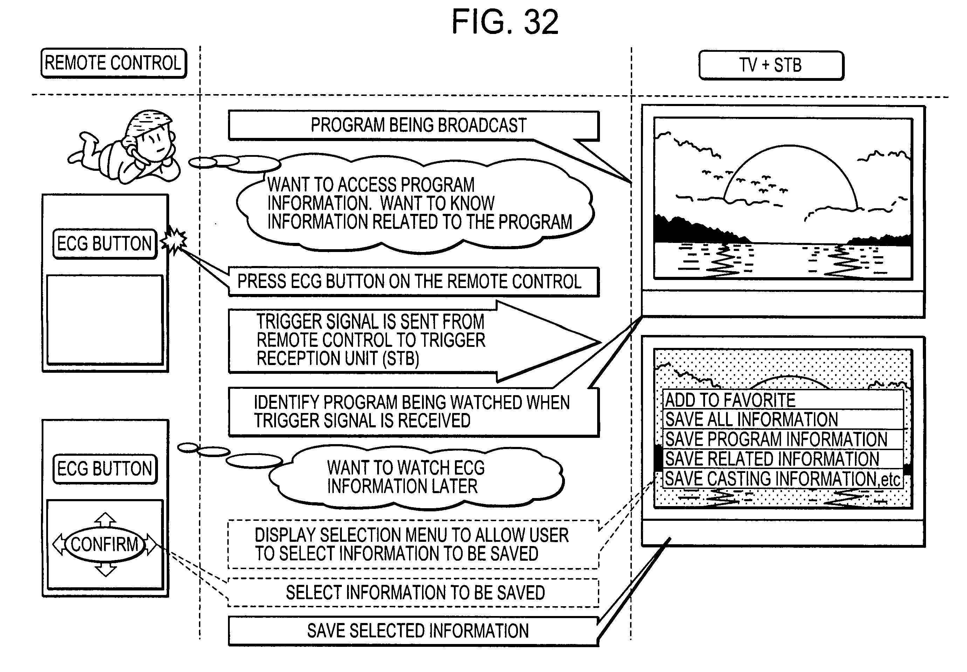

Next, with reference to FIG. 32, the following describes an actual operation of the storage browsing service in a system according to a preferred embodiment of the present invention. In the example shown in the figure, the broadcast reception terminal is a combination of a TV set and an STB that is operated by a remote control.

Suppose that the user wants to access the program information on a broadcast program being broadcast or the information related to the program. In such a case, the user presses ECG button on the remote control. Then, the trigger signal is sent from the remote control to the trigger reception unit (STB). The broadcast reception terminal identifies the program being watched when the trigger signal is received. If the user wants to watch the ECG information not immediately but after the broadcast, the ECG information storage service according to a preferred embodiment of the present invention is used. In this case, the broadcast reception terminal displays the selection menu to allow the user to select information to be stored. The user operates the remote control to select information the user wants to see. The information selected in this way is stored.

Metadata used for storage selected information may be processed in any of the following ways. The user may save (store) only the ID of the whole information and obtain it later from the server when the user wants to see the information later. The user may save an ID for each item according to the selected content. The user may save necessary metadata information according to the selected content. The user may save only metadata, which is meaningful for storage, according to the specifications of the receiver. The user may also refer to stored data and, if the data to be stored is already stored, does not save that data.

Data may be stored in any of the following locations and in any of the following ways. That is, data may be stored in a storage area in the receiver, in an external storage device (memory card, IC card, etc.), in the user information management server via the network, in some other terminal via the network, in some other terminal by mail, or in the storage area in the remote control.

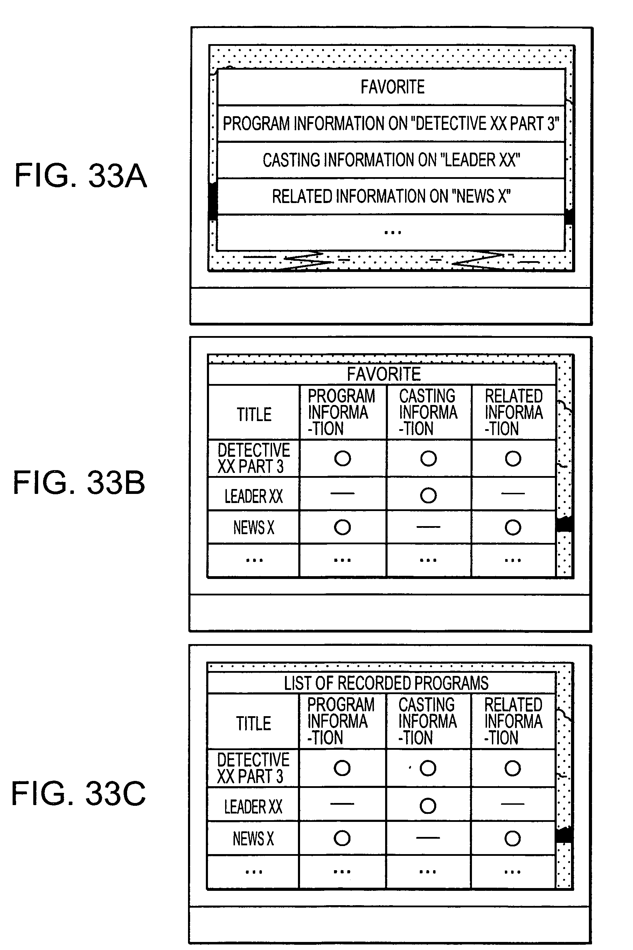

With reference to FIG. 33, the following describes an example of browsing of stored program information. FIG. 33A shows an example of the browsing of stored information. For example, regardless of whether the information is stored during the live broadcast or during the playback of a recorded program, the information can be displayed in the order in which they were stored (ascending order, descending order). The group of the stored information can also be compared with the user preference information for displaying the information in preference order.

FIG. 33B shows an example of the display of partially stored information. As shown in the figure, the metadata items of internally stored information can also be selected and displayed for browsing. FIG. 33C shows an example similar to that shown in FIG. 33B. As shown in the figure, the metadata items added to the recorded programs can also be selected and displayed for browsing.

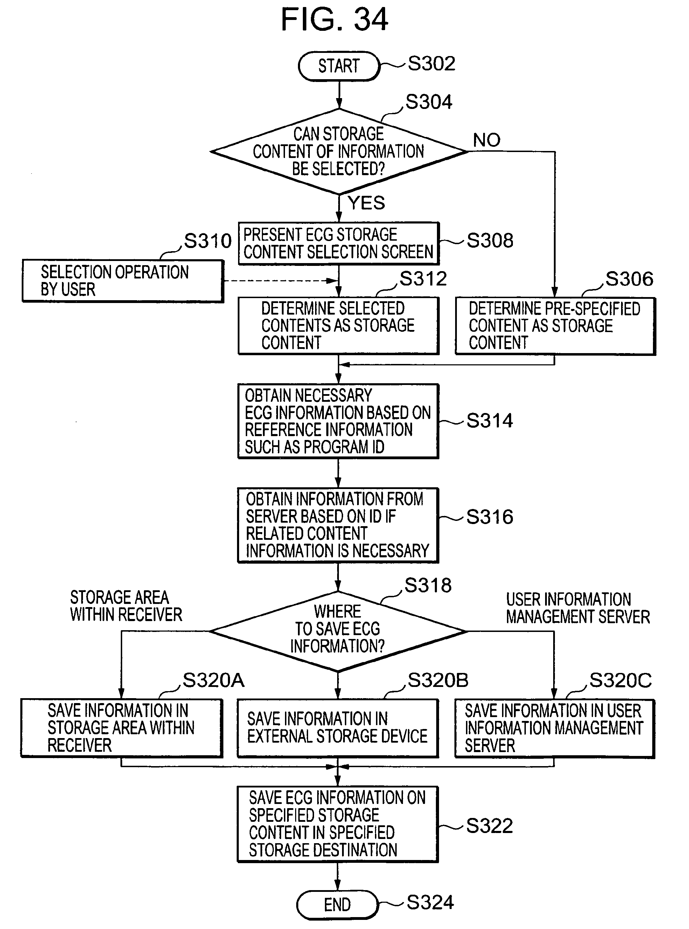

FIG. 34 shows an example of the processing flowchart for determining the storage content and the storage means of ECG information. As shown in the figure, when the processing is started (S302), whether the storage content of information can be selected is checked (S304). If the storage content cannot be selected, a pre-specified content is used as the storage content (S306) and control is passed to step S314 in which necessary ECG information is obtained based on the reference information such as the program ID. On the other hand, if the storage content of information can be selected, the ECG storage content selection screen is presented (S308). The user selects items to be stored based on the displayed selection screen (S310) and determines the selected contents as the storage content (S312).

Next, the necessary ECG information is obtained based on the reference information such as the program ID (S314). In this case, it is also possible to transmit the obtained ECG information to other receivers via means such as a mail. Next, if related content information is necessary, the information is obtained from the server based on the ID (S316). In this case, if the information is already displayed, the necessary information is already obtained in some cases. If so, step S316 may be omitted.

Next, the storage destination of the ECG information is determined (S318). The ECG information storage destination is, for example, a storage area within the receiver (S320A), an external storage device (S320B), or the user information management server (S320C). Next, the ECG information on the specified storage content is stored in the specified storage destination (S322) and the series of processing is terminated (S324). In this case, information already stored can also be processed so that it is not duplicated. For example, suppose that compact disc "B", one of the products, is related to the program "A" and this information is already stored. If the compact disc "B" is related also to the program "C" which information is to be stored next, only the information on the program "C" is stored because the information on the compact disc "B" is already stored.

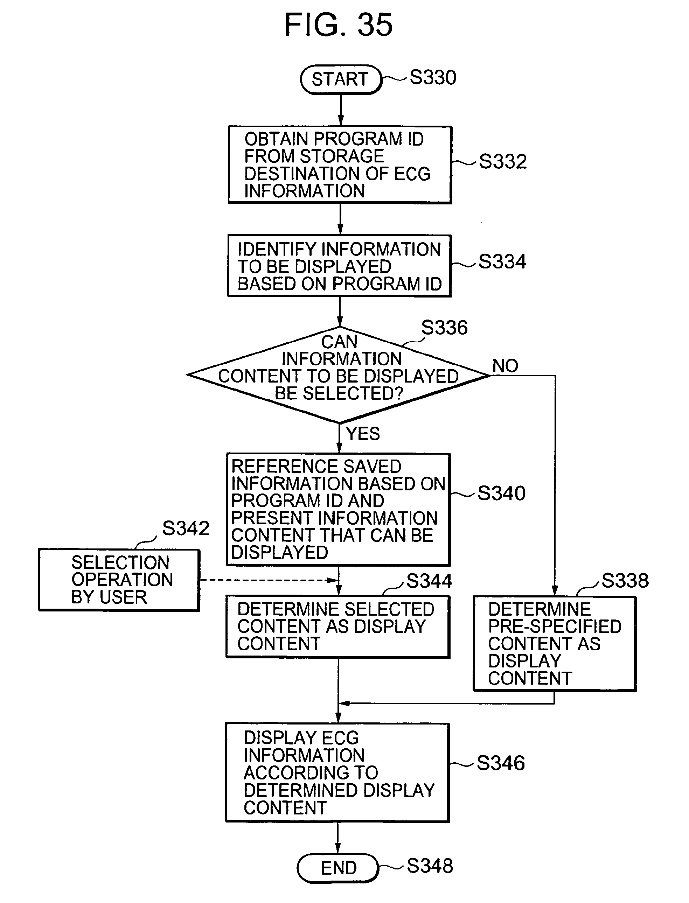

FIG. 35 shows the processing flowchart for the ECG information browsing operation. When the processing is started (S330), the program ID is obtained from the storage destination of the ECG information (S332). Next, the information to be displayed is identified based on the program ID (S334) . Next, whether the information content to be displayed can be selected is checked (S336) . If the information content cannot be selected, a pre-specified content is determined as the display content (S338), the ECG information is displayed according to the determined display content (S346), and the series of processing is terminated (S348). On the other hand, if the information content can be selected, the stored information is referenced based on the program ID and the information content that can be displayed is presented (S340). The user selects information by a remote control and determines the selected content as the display content (S344). Next, the ECG information is displayed according to the determined display content (S346) and the series of processing is terminated (S348).

This embodiment provides a method for utilizing the ECG service in which information on a program currently being broadcast is stored "without disturbing the user in watching the TV". To realize this, the embodiment provides the support function may allow the viewer to automatically save (store) a program or a content, which suits viewer's preference, by specifying a simple setting. The user may browse accumulated related information and use the ECG service in his or her spare time.

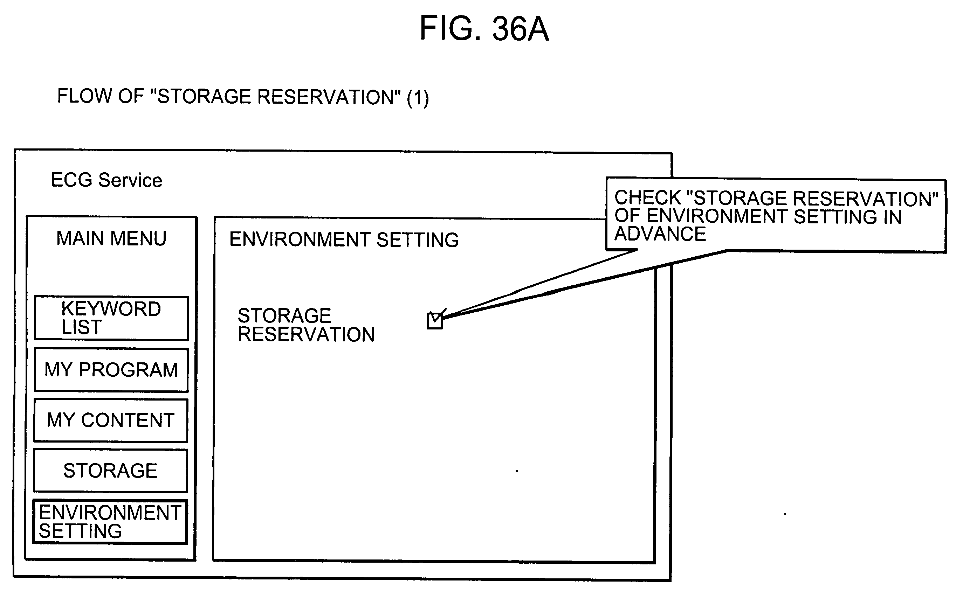

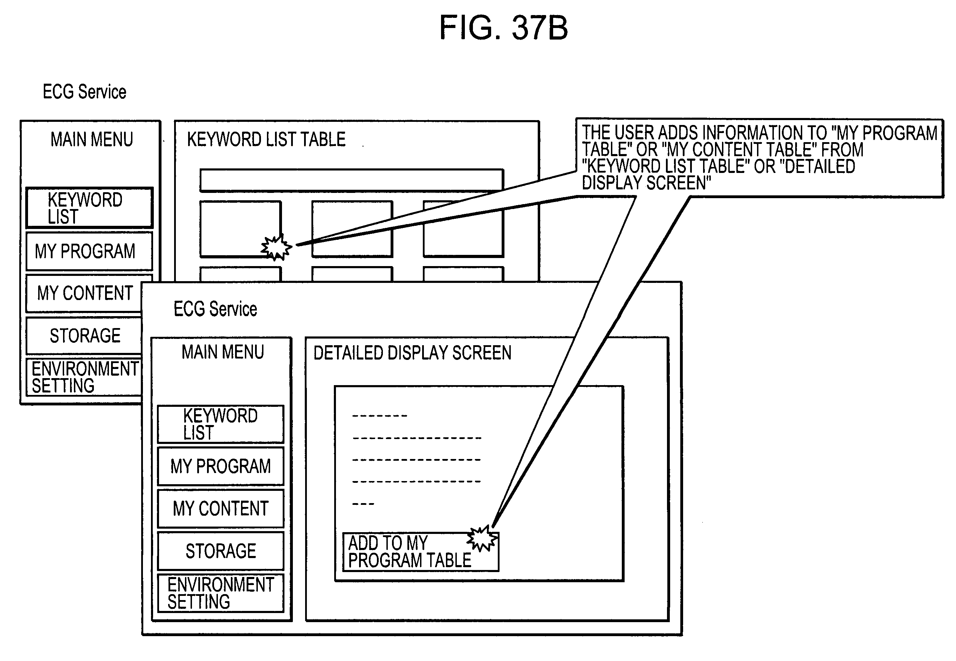

As shown in FIG. 36, the user who logs into the ECG service displays the "Environment setting" screen and marks the checkbox of "Storage reservation". Next, as shown in FIG. 37, the user registers ECG information to be stored into "My program table" or "My content table" from the "Keyword list table" or "Detailed display screen".

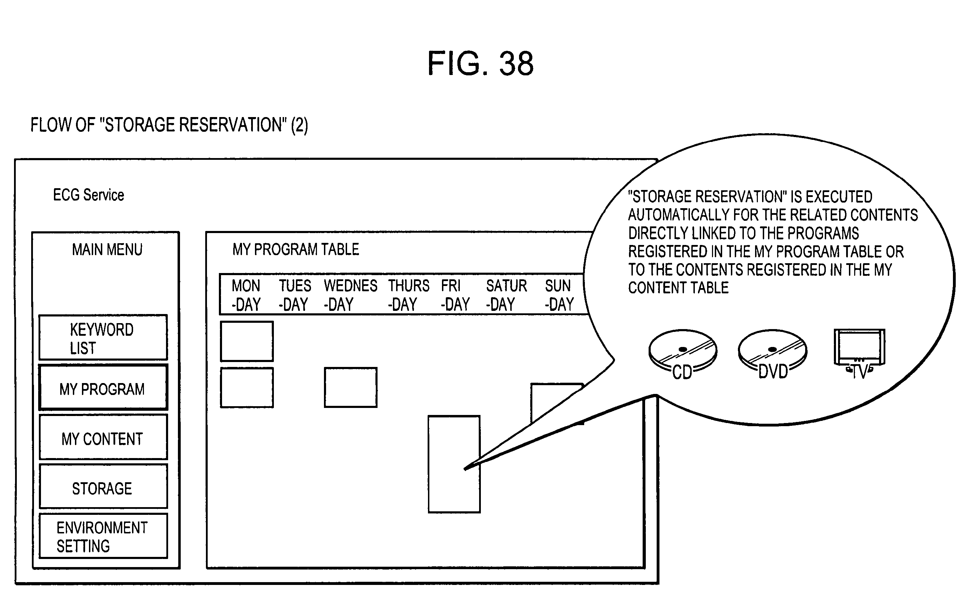

FIG. 38 shows the configuration of the screen for automatically executing "storage reservation" for the related contents directly linked to the programs registered in the My program table or to the contents registered in the My content table. The programs the user registers in the My program table and the contents the user registers in the My content table are those that suit user's preference. That is, there is good possibility that the programs and consents, linked to the programs and contends registered by the user, also suit user's preference. In this way, "storage reservation" is performed automatically by obtaining user's preference information and, at a storage time, referencing the user's preference information.

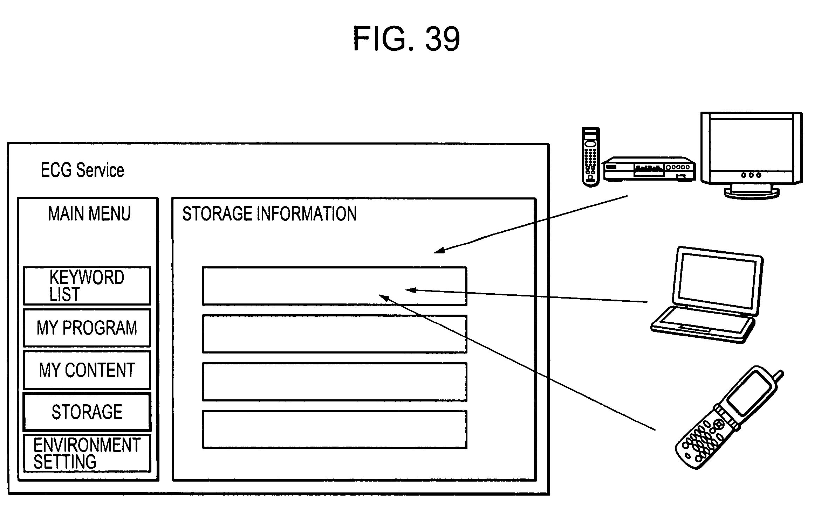

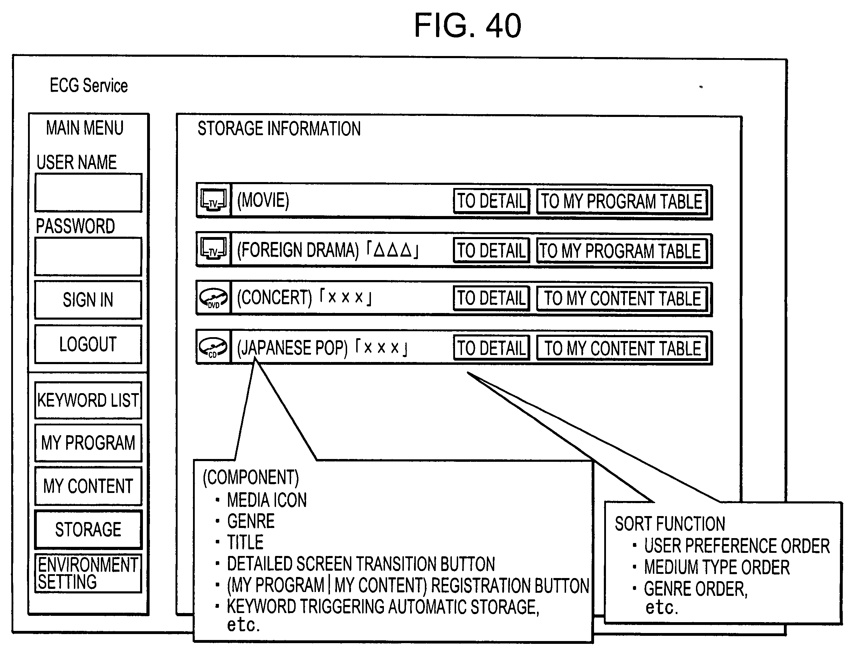

FIG. 39 is a diagram showing how the user selects interested information from accumulated "storage information" and registers the selected information in the My program table or My content table when the user uses the ECG service. FIG. 40 is a diagram showing the configuration of the screen in which the list of storage information is displayed. On the screen, "Media icon", "Genre", "Title", "Detailed screen transition button", "My program/My content registration button", and "Automatic storage keyword" are displayed as necessary. The list table also has the sort function for sorting the items in user preference order, media type order, or genre order.

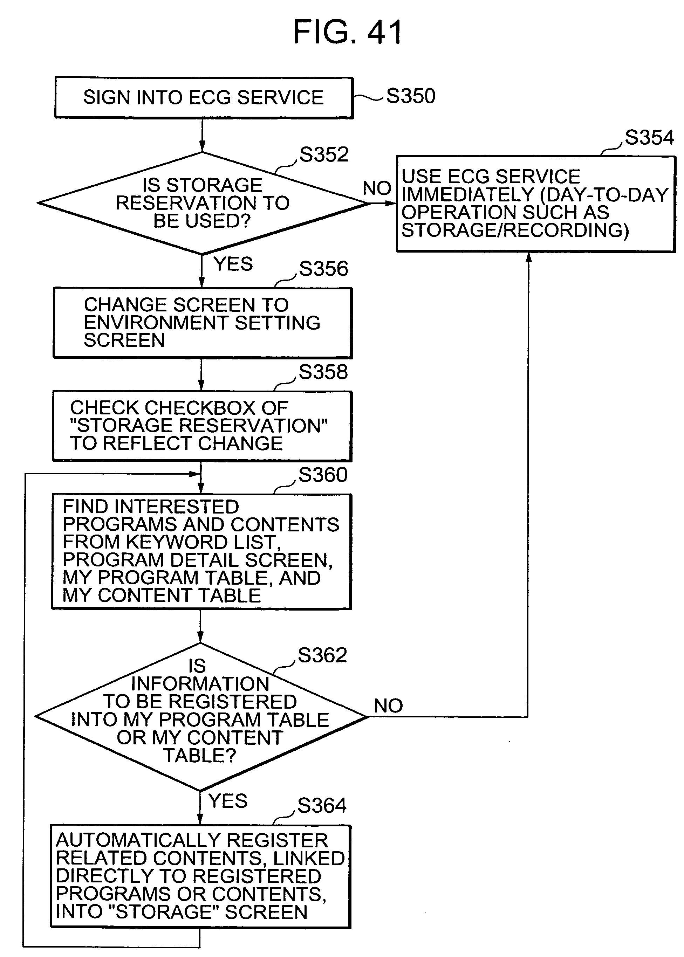

Next, with reference to FIG. 41, the following describes the operation flow of storage reservation. First, the user signs into the ECG service (S350). Next, whether storage reservation is to be used is checked (S352). If storage reservation is not used, the ECG service is used immediately (S354) . Conversely, if storage reservation is used, the screen changes to the environment setting screen (S356). Next, the user checks the checkbox of the "Storage reservation" to reflect the change (S358). Next, interested programs and contents are found from the keyword list, program detail screen, My program table, and My content table (S360). Next, whether to register information into the My program table or My content table is checked (S362). If no information is to be registered into the My program table or My content table, control is passed back to step S354 to use the ECG service immediately.

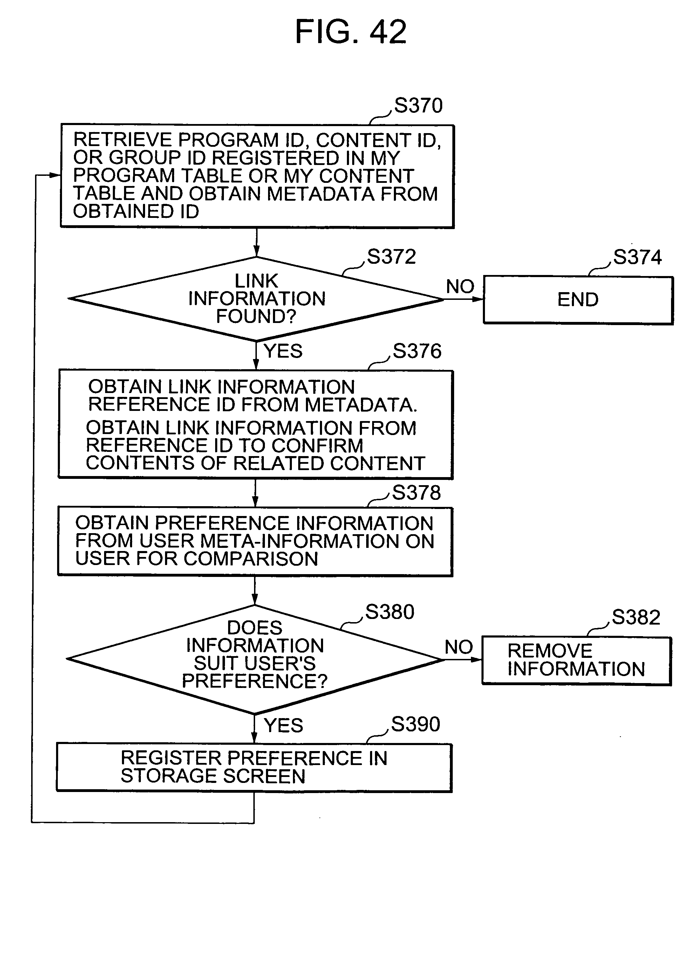

In addition, referring to FIG. 42, a program ID, a content ID, or a group ID registered in the My program table or My content table is retrieved to obtain metadata from the obtained ID (S370). Next, whether there is link information is checked (S372) . If there is no link information, the processing is terminated (S374). If there is link information, the link information reference ID is obtained from the metadata, and the link information is obtained from the reference ID, to confirm the contents of the related content (S376). Next, the preference information is obtained from the user meta information on the user for comparison (S378). Next, whether the content suits user's preference checked (S380). The content that does not suit the preference is removed (S382) and the content that suits the preference is registered in the storage screen (S390). The storage reservation processing is executed as described above.

As described above, the broadcast program providing system according to a preferred embodiment of the present invention may permit the user to save (store) storage information, which guides the user to ECG information, while watching a broadcast program. This may prevent the broadcast program watching time from overlapping with the ECG information browsing time, thus allowing the user to watch a broadcast program and to browse ECG information separately. In addition, the ability to access ECG information via the browsing terminal based on storage information, which has been stored, enables the user to browse ECG information independently of the watching environment of a broadcast program.

Although the broadcast program providing system, the broadcast reception terminal, the browsing terminal, the computer program and the computer program product of the preferred embodiment of the present invention have been described with reference to the attached drawings, the present invention is not limited to the embodiment given above. It is to be understood that changes, variations, combinations, sub combinations and the like will be apparent to those skilled in the art within the technological concept described in the claims and that those changes, variations, combinations, sub combinations and the like are considered to be within the technological scope of the present invention.

Although not mentioned individually, the system and the hardware configuration described above can be realized by various types of storage media readable by a computer or a computer program or computer program product delivered via a network. Of course, those storage media, computer program and computer program product are also considered to be within the technological scope of the present invention.

The present invention is applicable to the broadcast program providing system, broadcast reception terminal, browsing terminal, computer program and computer program product that can use the ECG service.

## Claims

1. A broadcast program providing system (100) comprising:
a broadcast program providing apparatus (310) configured to provide a broadcast program;
an electric content guide (ECG) information providing apparatus (350) configured to provide an ECG information on the broadcast program;
a broadcast reception terminal (210) configured to receive the broadcast program and the ECG information, wherein the broadcast reception terminal includes a storage information acquisition apparatus (214) configured to acquire storage information for guiding a user to ECG information, from the ECG information in response to a certain storage event;
a storage information storage location in which the storage information is stored; and
a browsing terminal (250) adapted to acquire and make it possible to browse the ECG information based on the storage information stored in the storage information storage location, in response to a certain browsing event.

2. The broadcast program providing system (100) according to claim 1 wherein the storage information storage location is placed in the ECG information providing apparatus.

3. The broadcast program providing system (100) according to claim 1 further comprising a storage server, wherein the storage information storage location is placed in the storage server.

4. The broadcast program providing system (100) according to claim 1 wherein the storage information storage location is placed in an external storage medium.

5. The broadcast program providing system (100) according to claim 1 wherein the storage information storage location comprises a mail message addressed to an designated address.

6. A broadcast receiving terminal (210) configured to receive a broadcast program provided from a broadcast program apparatus (310) and Electric Content Guide (ECG) information provided from an ECG information providing apparatus (350), the broadcast receiving terminal (210) comprising a storage information acquisition apparatus (214) configured to acquire storage information for guiding a user to ECG information from the ECG information, in response to a certain storage event.

7. The broadcast receiving terminal (210) according to claim 6 wherein the storage event comprises an on-time event inputted during access to a broadcast program via the broadcast receiving terminal.

8. The broadcast receiving terminal (210) according to claim 6 wherein the storage event comprises a previously set event previously set in the broadcast receiving terminal.

9. The broadcast receiving terminal (210) according to claim 6 further comprising a storage information storage location in which the storage information is stored.

10. The broadcast receiving terminal (210) according to claim 8 wherein the previously set event is set based on user preference.

11. The broadcast receiving terminal (210) according to claim 8 further comprising a browsing section configured to acquire and make it possible to browse the ECG information based on the storage information stored in the storage information storage location, in response to a certain browsing event.

12. A browsing terminal (250) enabling browsing Electric Content Guide (ECG) information provided from an ECG information providing apparatus, comprising:
a storage information acquisition apparatus (252) configured to acquire storage information for guiding a user to ECG information, from a designated storage information storage location, in response to a certain browsing event; and
an ECG information acquisition apparatus (254) configured to acquire ECG information from the ECG information providing apparatus and make it possible to browse the acquired ECG information, based on the acquired storage information.

13. The browsing terminal (250) according to claim 12, wherein the storage information storage location is placed in the browsing terminal.

14. The browsing terminal (250) according to claim 12, wherein the browsing terminal comprises an apparatus similar to a broadcast receiving terminal configured to receive a broadcast program and ECG information related to the broadcast program.

15. The browsing terminal (250) according to claim 12, further comprising an apparatus of different type to a broadcast receiving terminal configured to receive a broadcast program and ECG information related to the broadcast program.

16. The browsing terminal (250) according to claim 12, wherein the browsing event is activated only within a designated time period.

17. An operation terminal configured to operate a broadcast receiving terminal (210) configured to receive a broadcast program provided from a broadcast program apparatus (310) and Electric Content Guide (ECG) information provided from an ECG information providing apparatus (350), wherein the operation terminal makes the broadcast receiving terminal acquire storage information for guiding a user to ECG information from the ECG information, in response to a certain storage event.

18. The operation terminal according to claim 17, further comprising a storage information storage location configured to store the storage information.

19. An operation terminal configured to operate a browsing terminal (250) enabling browsing Electric Content Guide (ECG) information provided from an ECG information providing apparatus (350), wherein the operation terminal makes the browsing terminal (250) acquire storage information for guiding a user to ECG information from a designated storage information storage location, in response to a certain browsing event, and further acquire ECG information from the ECG information providing apparatus and make it possible to browse the acquired ECG information, based on the acquired storage information.

20. The operation terminal according to claim 19, wherein the storage information storage location is placed in the browsing terminal.

21. A computer program in a broadcast receiving terminal configured to receive a broadcast program provided from a broadcast program apparatus (310) and Electric Content Guide (ECG) information (350) provided from an ECG information providing apparatus, the computer program comprising instructions to operate the broadcast receiving terminal to acquire storage information for guiding a user to ECG information from the ECG information, in response to a certain storage event.

22. A computer program in a browsing terminal enabling browsing electric content guide (ECG) information provided from an ECG information providing apparatus, comprising instructions to operate the browsing terminal to acquire storage information for guiding a user to ECG information from a designated storage information storage location, in response to a certain browsing event, acquire ECG information from the ECG information providing apparatus, and make it possible to browse the acquired ECG information, based on the acquired storage information.
